(19) **Europäisches Patentamt / European Patent Office / Office européen des brevets**

(11) **EP 4 208 982 B1**

(12) **EUROPEAN PATENT SPECIFICATION**

(45) Date of publication and mention
of the grant of the patent:
**02.10.2024 Bulletin 2024/40**

(21) Application number: **21790574.4**

(22) Date of filing: **24.08.2021**

(51) International Patent Classification (IPC):
***H04L 9/32*** *(2006.01)*

(52) Cooperative Patent Classification (CPC):
**H04L 9/3252**

(86) International application number:
**PCT/NL2021/000012**

(87) International publication number:
**WO 2022/050833 (10.03.2022 Gazette 2022/10)**

(54) **METHOD FOR ELECTRONIC SIGNING AND AUTHENTICATON STRONGLY LINKED TO THE AUTHENTICATOR FACTORS POSSESSION AND KNOWLEDGE**

VERFAHREN ZUR ELEKTRONISCHEN UNTERSCHRIFT UND AUTHENTIFIZIERUNG STARK MIT BESITZ UND WISSEN DER AUTHENTIFIZIERERFAKTOREN VERBUNDEN

PROCÉDÉ DE SIGNATURE ET D'AUTHENTIFICATION ÉLECTRONIQUES FORTEMENT LIÉES À LA POSSESSION ET À LA CONNAISSANCE DE FACTEURS D'AUTHENTIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2020 NL 1043779**

(43) Date of publication of application:
**12.07.2023 Bulletin 2023/28**

(73) Proprietor: **Wellet B.V.**
**1411 JD Naarden (NL)**

(72) Inventor: **VERHEUL, Eric Robert**
**1411 JD Naarden (NL)**

(74) Representative: **Nederlandsch Octrooibureau**
**P.O. Box 29720**
**2502 LS The Hague (NL)**

(56) References cited:
**US-A1- 2005 039 013**

• **BENDER J ET AL: "Privacy-friendly revocation management without unique chip identifiers for the German national ID card", COMPUTER FRAUD AND SECURITY, OXFORD, GB, vol. 2010, no. 9, 1 September 2010 (2010-09-01), pages 14 - 17, XP027355578, ISSN: 1361-3723, [retrieved on 20100901]**
• **ROLAND VANRIJSWIJK-DEIJ ET AL: "Using Trusted Execution Environments in Two-factor Authentication: comparing approaches", 22 June 2013 (2013-06-22), XP055194668, Retrieved from the Internet <URL:http://subs.emis.de/LNI/Proceedings/Proceedings223/20.pdf> [retrieved on 20150609]**

**Description**

***1. Background* and *general problem statement***

*1.1. Background*

Our physical world is rapidly transforming to an online world based on internet technologies. Where citizens, consumers, businesses and public authorities used to perform interactions and transactions based on physical presence, e.g. in shops or offices, this is transforming to electronic interactions and transactions. For this transformation to be successful it is vital that there is trust in such online environments. Lack of such trust makes consumers, businesses and public authorities hesitant carrying out electronic interactions and transactions and adopting new services. This trust is also hampered by the many security incidents appearing in the media. Many of these incidents relate to insufficient user authentication (compromise of user accounts), identity theft (falsified signatures on electronic forms) or privacy protection (compromise of personal data) at businesses and public authorities.

It is therefore required that users (collective term for citizens, consumers, employees) and Service Providers (SPs, collective term for businesses and public authorities) have trust in online mechanisms on:

a. *User authentication*

b. *Electronic Signatures*

c. *Personal data protection*

In the three sections below we further discuss these aspects.

*1.2. User authentication*

In July 2014 the European Union has passed the eIDAS regulation [eIDAS-2014]. Amongst other things, the regulation covers interoperable electronic identification between member states. For this the regulation specifies three assurance levels for user authentication: Low, Substantial and High. These assurance levels are further specified in the eIDAS implementing regulation [eIDAS-2015]. The eIDAS assurance levels stipulate requirements:

- on the *Authenticator* itself, the technical means of user authentication towards Service Providers, e.g. a token, smartcard or mobile application,
- the *binding* of the issued Authenticator to the user, i.e. conditions on the user registration and Authenticator delivery processes deployed.

Each the three eIDAS level has its designated assurance requirements on the Authenticator and the user binding thereof. Other standards on user authentication such as [NIST-8oo-63], actually differentiate assurance levels for the Authenticator (Authenticator Assurance Level, or AAL) and the user binding thereof (Identity Assurance Level, or IAL). The level eIDAS Low corresponds to AAL/IAL 1, Substantial to AAL/IAL 2 and High to AAL/IAL 3.

A fundamental Authenticator requirement for both eIDAS assurance levels Substantial and High is that it should be based on at least two of the three *authentication factors*: possession (something the user has), knowledge (something the user knows) and biometrics (something the user is). A user-id/password is only based on one (possession) factor is a typical Authenticator of Low authentication assurance level.

An essential Authenticator difference between the levels Substantial and High is stipulated in Section 2.3.1 of [eIDAS-2015]: an Authenticator at level Substantial, respectively High, should be resistant against an attacker with moderate, respectively high *attack potential*. As indicated in the (informal) EU guidance [eIDASGuide] on the eIDAS implementing regulation [eIDAS-2015] the term attack potential refers to Appendix B of the standard ISO/IEC 18045, the Common Criteria methodology for IT security evaluation.

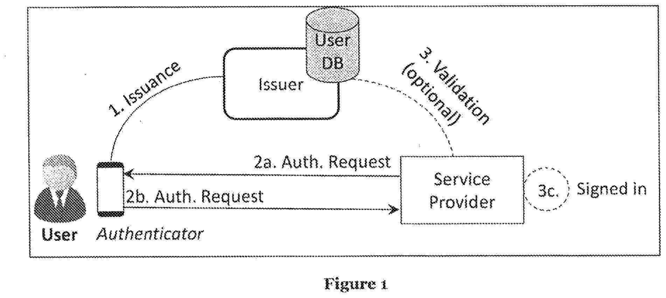

In essence, two methods are deployed in practice authenticating a user for a service provider using the Authenticator of the user: *direct* and *centralized* (in-direct). In the first approach the service provider needs to directly interact with the Authenticator to authenticate the user, i.e. there is no other party involved other than the user and the service provider. See Figure 1. This setup does not only require the service provider to implement Authenticator specific protocols but also setting up a helpdesk for users. Also, the SP needs to interact with the issuer of the Authenticator, e.g. to validate that is not revoked. The implementational complexity grows when different Authenticator types need to be supported.

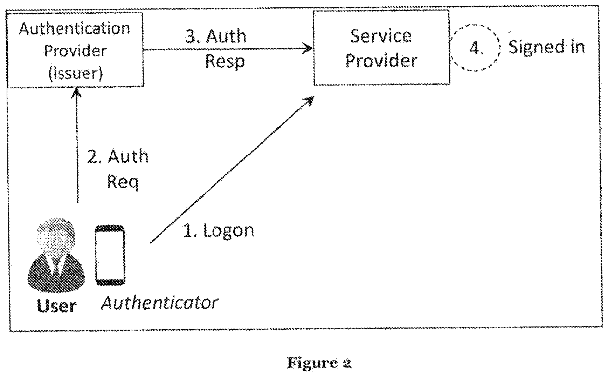

In the centralized approach these issues are addressed by letting the actual Authenticator interaction be done by a third party, i.e. an *Authentication Provider* (AP) that also issues the Authenticator. When the user wants authenticate to the service provider he is redirected to the AP accompanied with an authentication request. See Figure 2. The AP handles the Authenticator interaction and the user is sent back to the Service Provider with the authentication result. If problems arise with the Authenticator interaction the user contacts the AP.

Although the direct approach has certain security and privacy advantages the operational advantages for SPs make it the favorable method in current practice. The eIDAS regulation does not favor the direct or the centralized approach.

in November 2015 other European legislation was passed in which user authentication has a prominent position. This is the second Payment Services Directive [PSD2-2015] that introduces the term Strong Customer Authentication (SCA) that needs to be applied by banks ('payment service providers') as part of "customer-initiated" online payments. The SCA requirements are further specified in a Commission delegated regulation [PSD2-2017]. SCA is quite similar to the eIDAS levels Substantial and High, e.g. it is required that SCA is based on at least two of the three authentication factors. As understandable from its origin, specific SCA requirements relate to the protection of the amount and beneficiary in the online payment. Although SCA does not need be based on electronic signatures this is commonly referred to as WYSIWYS (What You See Is What You Sign).

To achieve SCA, banks issue electronic identification means to their customers which are similar to the Authenticators discussed above. The actual interaction in an online payment closely resembles that of Figure 2 where the bank plays both the role of AP and SP.

We refer to *strong* authentication as a collective term for two-factor authentication comparable with eIDAS Substantial and High, SCA and NIST levels AAL/IAL 2 or 3.

Historically, strong Authenticators were implemented as separate hardware devices, such as smartcards or One-Time-Password tokens. With the rise of mobile devices such as smartphones there is a trend to base an Authenticators on a mobile application (*Authenticator App*). The rationale behind this trend is both efficiency and user-friendliness. This trend is also very visible in the banking sector where classical internet banking using a personal computer based internet browser is being replaced by a mobile application (banking App). The security of both an Authenticator App and a banking App is based on the security features of the underling platform. Here it is challenging to meet the security requirements on strong authentication, most notably the resistance against attackers with moderate or high attack potential as discussed earlier. This in particular includes the implementation of a knowledge factor (Personal Identification Number, or PIN) that is strongly connected to the Authenticator App. The regular solution is to implement the PIN in an online service, requiring the user to successfully present this to the service as part of authentication. One can argue that this approach does not strongly binds the PIN to the authenticator as it precludes the PIN to be under its "sole control".

### 1.3. *Electronic Signatures*

The eIDAS regulation also defines the legal notion of various types of electronic signatures and seals and stipulates requirements on these. An electronic seal is technically the same as an electronic signature, but a seal is associated only to a legal person/entity. For simplicity we only discuss signatures in this document but the techniques discussed also apply to seals. The eIDAS regulation specifies an electronic signature as "data in electronic form which is attached to or logically associated with other data in electronic form and which is used by the signatory to sign". The regulation also specifies *advanced* and *qualified* electronic signature which are most relevant for this document. An *advanced* signature:

    a. is uniquely linked to the signatory;
    b. is capable of identifying the signatory;
    c. is created using electronic signature creation data that the signatory can, with a high level of confidence, use under his/her sole control; and
    d. is linked to the data signed therewith in such a way that any subsequent change in the data is detectable.

In practice, strong electronic signatures are based on public key cryptography, cf. [STINSON]. Here the user generates a public-private key pair. The private key is kept secret by the user and the public key can be provided to service providers. The private key allows the user to generate a signature on a message that can be verified with the public key. The basic idea is that the private key cannot be derived from the public key. We use the term *digital signature* for an electronic signature bases on public key cryptography.

To allow binding with the user identity, the public key can be bound to the user identity in a so-called public key certificate. This is a message containing the user public key and the user identity that is digitally signed by a Certificate Authority (CA). The public verification key of the CA is publicized. Amongst other things, certificates contain an issuance data/time and a unique serial number. See [X.509].

Certificates also allow for convenient mechanisms assessing their validity, e.g. non-revoked and non-suspended, providing additional assurance to the certificate. For this two mechanisms exist, cf. [ETSI-319 411]. The first mechanism consists of the certificate issuer periodically, e.g. daily, publicizing a list of revoked or suspended certificates. This list, called Certificate Revocation List (CRL), is typically based on the serial numbers of the certificates only. Relying parties can download the CRL and assess the validity of a certificate. The second mechanism, more commonly used, is that certificate issuer makes the Online Certificate Service Protocol (OCSP) available for relying parties. These parties can send a certificate or only its serial number to the OCSP-service which will respond with the status of the certificate. This status is electronically signed by the OCSP-serviee/certificate issuer.

The eIDAS regulation lets the user "creation data" (e.g. private key) be stored in an *electronic signature creation device* (SCD) that creates the electronic signatures. According to the eIDAS regulation, an SCD is configured software or hardware used to create an electronic signature.

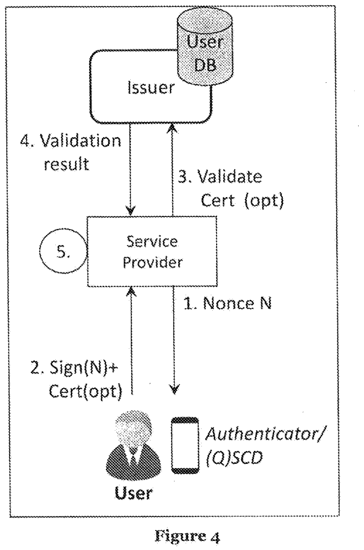

One can conveniently turn an SCD into an Authenticator. This can support use eases of various assurance and convenience levels. Compare Figure 4. In the basic use case the service provider generates a random nonce, e.g. 8 or more random bytes, and requests the user to sign this with its SCD. The user signs the nonce and sends the signature back to the service provider together with the public key certificate allowing for verification. The service provider verifies the signature with the public key and, if this is successful, assesses the user identity from the certificate.

The regulation also introduces the notion of *qualified electronic signatures* (QES). Such signatures correspond with signatures of the highest assurance level and have the equivalent legal effect of a conventional, i.e. handwritten, signature.

An *qualified* signature is an advanced electronic signature that is created by a qualified electronic signature creation device, and which is based on a qualified certificate for electronic signatures. The referral to a "certificate" indicates that implementations of eIDAS advanced and qualified signatures are based on public key cryptography as discussed above.

A qualified electronic signature should be generated using a qualified electronic signature creation device (QSCD). An important QSCD requirement is that the user can "with a high level of confidence, use [the QSCD] under his/her sole control". The context of (qualified) signatures closely resembles that of (What You See Is What You Sign) in SCA.

In the predecessor of the eIDAS regulation (the 1999 directive on electronic signatures) an QSCD could formally only be implemented as a "smartcard" based device (smartcard). This is a separate integrated circuit card (ICC) on which an application is deployed to perform security critical functions such as electronic signing or performing authentication. Similar to a strong authenticator, such function are protected with access control based on at least two of the three authentication factors.

Smartcards are rather user unfriendly as the user needs to carry these around including equipment (smartcard reader) to interact with the device.

It would be convenient if a QSCD could be implemented as a mobile application, i.e. as a signing app. The eIDAS regulation has made this possible by the term "with a high level of confidence" in the QSCD requirement mentioned above which in fact is an addition to the 1999 directive requirement. This addition allows for qualified "remote signing" through a remote qualified electronic creation device (rQSCD) at service provider. The idea is that the user authenticates to a signing service provider at eIDAS assurance level High which then forms the qualified electronic signature on behalf of the user.

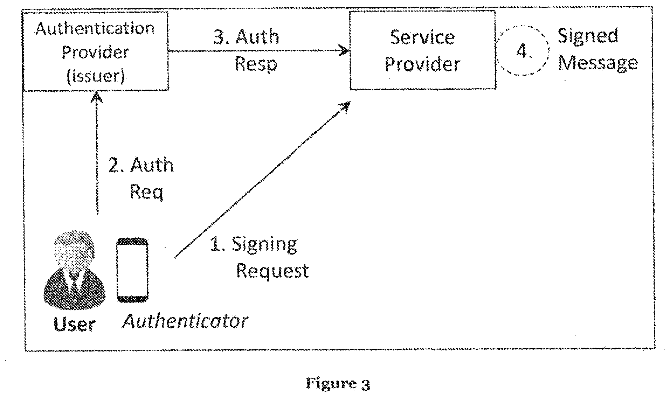

That is, the eIDAS regulation allows forming an rQSCD based on Authenticators of eIDAS assurance level High. Compare Figure 3. We note that the roles of AP and SP (remote signing service) could coincide. Through the relation with (qualified) electronic signing the availability of Authenticators meeting eIDAS High requirements, most notably those based on mobile applications, becomes very important.

*1.4. Personal data protection*

The General Data Protection Regulation [GDPR] is an important step for data protection in the European Union. The GDPR sets out seven key principles including that of data minimization: "personal data collection shall be adequate, relevant and limited to what is necessary in relation to the purposes for which they are processed". In several articles, e.g. the "data protection by design" article 25, the GDPR suggests the usage of pseudonymization and encryption as technical enablers achieving data minimization.

One can argue that a conventional public key certificate setup, used in a direct approach does not satisfy the data minimization requirement. Indeed, in such a setup the certificate will typically contain directly identifying data of the user, such as first and last names and perhaps even a social security number. In many use cases, this personal data is not required. Moreover, this data (and in fact the certificate itself including the user public key) can serve as a unique identifier allowing service providers to conveniently link their databases. That, one can argue that using a static certificate itself contains too much information and is conflicting the data minimization requirement.

The FIDO (Fast. ID Online) [FIDO], its successor WebAuthn [WebAuthn] and the German eID-card [BENDER] address this issue. FIDO is completely based on pseudonymized authentication as the public-private keypairs generated by the FIDO Authenticator are service provider specific. As the FIDO pseudonyms are formed by the public keys they are service provider specific by construction.

The German eID-card allows users to authenticate using a persistent pseudonym as an alternative to directly identifying personal data such a social security number or a name. See [BENDER]. The German eID also provides service provider specific pseudonyms. An important privacy requirement, cryptographically met in both examples, is that service providers cannot link users through their pseudonyms.

Such privacy properties typically come with a price in security, user-friendliness or both. This is related to Authenticator revocation, i.e. the process allowing the user to (temporarily) disable her Authenticator that has gone awry, e.g. stolen or lost. The eIDAS regulation [eIDAS-2015] explicitly requires that timely revocation of Authenticators must be possible. The choice for pseudonymous authentication typically implies that the Authenticator revocation becomes more challenging. Indeed, each service provider associates the Authenticator with a different pseudonym. For this the issuer of the German eID distributes service provider-specific revocation lists ('black lists') containing the pseudonyms corresponding with revoked eID-cards. As the number of lists grows linearly with the number of service providers, this makes the mechanism quite cumbersome. Such revocation itself introduces a privacy risk too. Indeed, if only one eID-card is revoked only one pseudonym will be new to all the service providers revocation lists allow linking the user.

The FIDO standard does not support revocation at all. Instead it requires the user to revoke its FIDO Authenticator at all service providers he registered it. This is not user-friendly and in practice users will typically not revoke their FIDO Authenticator at all individual service providers thus hampering security.

Providing privacy in a centralized authentication approach can also be challenging. Indeed, in a typical implementation the AP knows both the identity of the user as the service provider the user wants to logon to. There are many cases where just the information that a user was accessing a given service may constitute a breach of privacy. Such cases include a user retrieving results from a certain medical testing facility or a user getting an on-line psychiatric consult. This concern is also explicitly mentioned in the broadly used centralized authentication standard SAML [SAML]. A simple solution to remedy this is making the AP 'blind', i.e. by not giving him access to the service provider identity he is authenticating for. Although this appears privacy friendly, this would hamper security as it would make the system vulnerable to so-called Man-in-the-Browser attacks. That is, malware in the user browser manipulates the user that he is authenticating to another service provider then is actually the case. In this case a fraudster could for instance get access to sensitive health data. A 'blind' AP cannot warn the user against this. More fundamentally, a 'blind' AP seems in conflict with privacy regulations as he is not able to tell the user which service providers he has given data to.

### 1.5. *General problem statement*

The classical implementation of an Authenticator of eIDAS assurance level High consists of a PKI smartcard application deployed on a smartcard based on a static certificate binding the user identity with public key. Compare [IAS].

As indicated in the previous sections, the usage of a static certificate hampers user privacy as it allows relying parties to link their databases using the certificate. On the other hand, the alternative of not using certificates and giving relying parties their own, unique public keys hampers timely revocation.

Also, a classical smartcard implementation is both expensive and user-unfriendly. It is expensive as a separate smartcard is required which needs to be securely sent to the user too. A classical smartcard implementation is user-unfriendly as users do not want to carry around with smartcard and smartcard readers. There is a trend that users only want to carry around their mobile devices, e.g. smartphones.

To remedy this, efforts are made to implement Authenticators as mobile application on mobile devices, Although such devices have trusted execution environments to securely store and use cryptographic keys in a mobile application, one of fundamental issues binding a possession or biometric factor to the mobile application. This is due to the fact that mobile trusted execution environments do not cater for trusted storage of separate application possession factors such as PINs or biometric factors such as fingerprint templates. This is due to the fact that, different from smartcards, mobile trusted execution environments are not equipped with their own trusted storage available for applications. See [COOIJMANS].

The previous discussion leads to the following problem statement. For both the direct and the centralized approach strong Authenticator implementations are required meeting the following requirements:

### 1) *Strong authentication*

implementations should provide authentication based on two of the three authentication factors, e.g. based on possession and knowledge.

*2) Support for (remote) electronic signatures based on public key cryptography*

The implementation should support on public key cryptography in order to provide for the strongest form of signatures and authentication possible.

*3) Flexible implementation*

Implementations should support for flexible implementation, i.e. not necessarily based on smartcards. It should be possible to base implementation on a mobile application.

*4) Privacy friendly*

Implementations should support pseudonymous authentication preventing different service providers linking their registrations based on authentication results.

*5) Timely revocation in a user-friendly fashion*

Implementations should support for timely revocation of Authenticators in a user-friendly fashion.

## *2. Authenticator model*

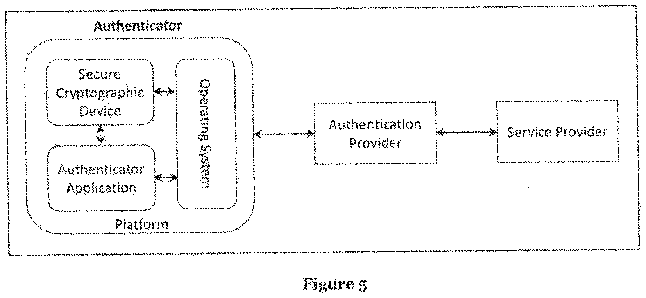

The model we take for an Authenticator is based on the centralized authentication model and consists of the five parts as indicated in Figure 5. In Section 5 we discuss variants and extensions to this model and our techniques, including one in the direct authentication approach.

*1. Platform*

This is the physical manifestation of the Authenticator for the user. It for instance can be a personal computer or a mobile device such as a smartphone.

*2. Operation System*

This forms the lowest layer of the user computing environment and is based on the platform. It supports interaction with the outside world including the user, forms the basis for the user Application Environment and the interaction of that with the Secure Cryptographic Environment (see below).

*3. Authentication Application (A-APP)*

In the A-APP all of the functional part of the Authenticator is implemented and some of the security part. The A-APP resides in an Application Environment (AE) in which developers can implement their own cryptographic operations but the protection of cryptographic keys is not as secure as in the Trusted Execution Environment. The A-APP has its own local storage that is typically separated by the local storage of other applications by the Operating System.

*4. Secure Cryptographic Environment (SCE)*

This SCE allows for secure (random) generation and storage of cryptographic keys and for secure usage of the keys in cryptographic operations. An application in the *Application* Environment can instruct the Trusted Execution Environment to generate cryptographic keys and to use them. However, secret/private keys can only be used but cannot be exported from the Trusted Execution Environment. Moreover, developers are not able to implement their own cryptographic operations inside the SCE.

*5. Authentication Provider (AP)*

The AP will issue Authenticators to users and appropriately bind them to the user, e.g. in line with the eIDAS requirements [eIDAS-2015]. As indicated in Section 1, the user and its Authenticator is redirected to the AP by an SP accompanied with an authentication request. The AP interacts with the user Authenticator to authenticate him. If this is successful, the AP sends an authentication response to the SP. The AP can recognize the user and the user A-APP, e.g. through a User-ID.

This Authenticator model corresponds with the setup of modern mobile devices, e.g. Android (Google) based mobile devices and Apple (e.g. iOS, macOS) based devices and. In Android context the SCE is typically known as "hardware backed Android keystore" and in Apple context is known as "Secure Enclave". We note that the SCE could also be formed by a separate hardware device. This could for instance be a SIM card with a specific card application on it or a cryptographic device connected to the platform in a wired fashion, e.g. through the MicroSD interface, or in a wireless fashion, e.g. through Bluetooth.

### 3. Mathematical and cryptographic prerequisites

#### 3.1. Mathematical context and notation

We let $F_r$ denote the Galois field consisting of the integers modulo a prime number r. We let o and 1 respectively denote the zero and unit element of $F_r$. We also let $F_r^*$ denote the multiplicative subgroup, i.e. the non-zero elements in $F_r$.

See [STINSON]. We sometimes implicitly use that $F_r$, respectively $F_r^*$, corresponds to the integers in the interval $[0, r-1]$, respectively $[1, r-1]$. We let $|r|_b$ denote the length of r in bits and $|r|_B$ its length in bytes.

Central in our constructions is an additive group $((G), +)$ of order $q$, generated by a generator element $G$. We use additive notation as this is customary in the context of elliptic curve groups one deploys in practice. For simplicity of presentation we assume that $q$ is prime but the constructions discussed also work when $q$ is not a prime number. For any natural number scalar $n$ and element $H \in \langle G \rangle$ we define the (point) multiplication $n \cdot H$ as adding $H$ n-times, e.g. $2 \cdot H = H + H$. The *discrete logarithm* of $J \in \langle G \rangle$ with respect to H is the unique $x \in F_q$ such that $J = xH$. We write $\log_H(J)$. We often use compact notation omitting the "·" symbol. As $nH = mH$ if and only if $n = m \bmod q$ we can represent scalars as elements of $F_q$, i.e. the Galois field consisting of the integers modulo the prime number $q$. This allows for compact notation such as $x \cdot G$, $-x \cdot G$ for $x \in F_q$ and $y^{-1} \cdot G$ for $y \in F_q^*$. A randomly, or cryptographically secure pseudo randomly, chosen element from a set is denoted by $\varepsilon_R$.

We assume that the group $(\langle G \rangle, +)$ satisfies the usual cryptographic security properties, i.e., that the discrete logarithm problem, the Diffie-Hellman problem and the Decision Diffie-Hellman are intractable. See [HANKERSON].

Although our constructions work for any group $(\langle G \rangle, +)$, one can think in our constructions of the group of points over a field $F_p$ on a curve with simplified Weierstrass equation

$$y^2 = x^3 + ax^2 + b \ (1)$$

for some suitable $a, b \in F_p$. That is, each non-zero group element takes the form $(x,y)$ where $0 \le x, y < p$ satisfying Equation (1) modulo $p$. Compare [HANKERSON]. We denote the zero element (point at infinity) as $O$. For practical implementations one can use, for instance, a curve from [BRAINPOOL], [SEC-1] or [DSA], i.e. the NIST curves.

A Personal Identification Number (PIN) is typically a numeric string of length 4, 5, 6. For generality and simplicity of presentation we choose a more generic PIN representation. A PIN is a byte array of length L, i.e. of the form $\{P_{L-1}, P_{L-2}, ..., P_0\}$ with all $0 < P_i < 256$, i.e. representing a non-zero byte value. Typically the byte values correspond to printable ASCII-values in which case the PIN can also be represented as a string "$P_{L-1}, P_{M-2}, ..., P_{L-1} ..., P_0$". Every PIN has an integer PIN-value given by $\sum_{i=0}^{L-1} P_i \cdot 256^i$ and each PIN-value corresponds to one unique PIN.

For example, the ASCII value of the digits 0, 1, 2, 3, 4 are 0x30, 0x31, 0x32, 0x33, 0x34 in hexadecimal representation. Consequently the PIN 01234 is a PIN of length 5 and is represented by the array {0x30, 0x31, 0x32, 0x33, 0x34} and has a PIN-value equal to 250.

For simplicity of presentation our method descriptions only support one fixed PIN length L. However these methods can be easily extended to simultaneously support various PIN lengths, e.g. all PIN lengths smaller than a certain maximum length $M$.

#### 3.2. Digital Signature Schemes

Part of our novel setup for strong authenticators is a method to strongly bind the user PIN to a digital signature. This method works for several standard digital signature algorithms including the most commonly used DSA. See [DSA]. We specify this method for ECDSA, the Elliptic Curve variant of DSA, from which the generic method for DSA easily follows. In Section 5.3 we discuss other standard digital signature algorithms for this method works.

We first describe the working of ECDSA. The context of this is the group $((G), +)$ introduced earlier. Here the user has a private key $u \in \mathbb{F}_q^*$ and a public key $U = uG$. Algorithm 1 and 2 below specify ECDSA signing and verification following [HANKERSON]. In this construction a secure hash function $H(.)$ appears with output length equal to $|q|_B$ bytes. Such a hash function can typically be constructed by taking a hash function with a larger output size and truncating it. See [NIST-180-4].

**Algorithm 1**: ECDSA signature generation

Input: message $M$, private key $u$.
Output: Signature Sig = $(r, s)$.

 1. Computed $H(M)$ and convert this to an integer $e$.
 2. Select $k \in_R [1, q - 1]$.
 3. Compute $kG = (x, y)$ and convert $x$ to an integer $\bar{x}$.
 4. Compute $r = \bar{x} \bmod q$. If $r = 0$ then go to Step 1.
 5. Compute $s = k^{-1}(e + u \cdot r) \bmod q$. If $s = 0$ then go to Step 1.
 6. Return signature Sig = $(r,s)$.

We note that in practical implementations the calculation of the hash value (Step 1) is not performed by the SCE. Instead the hash value of $M$ is pre-computed as is the integer $e$ in the AE which is then sent to the device. The SCE then performs Steps 2-6. The rationale for this is that SCEs typically have limited computational and communicational capabilities making the hash calculation time expensive. Most cryptographic libraries and Application Programming Interfaces (APIs) for ECDSA allow the specification of a "DIGEST_NONE" mode facilitating this. Also the Secure Cryptographic Devices in Android based devices and Apple based (e.g. iOS, macOS) devices cater for this.

**Algorithm 2:** ECDSA signature verification

Input: public key $U$, message $M$, signature $(r,s)$.
Output: Acceptance or rejection of the signature.

 1. Verify that r, s are integers in the interval $[1, q - 1]$. On failure reject the signature.
 2. Compute $H(M)$ and convert this to an integer $e$.
 3. Compute $w = s^{-1} \bmod q$.
 4. Compute $G' = wG$ and $U' = wU$.
 5. Compute $X = eG' + rU'$.
 6. If $X = O$ the reject the signature.
 7. Convert the x-coordinate of $X$ to an integer $\bar{x}$; compute $v = \bar{x} \bmod q$.
 8. If $v = r$ then accept signature otherwise reject the signature.

For reasons indicated later, Algorithm 2 is not the regular description of ECDSA signature verification. In de regular description Steps 4 and 5 are:

 4. Compute $t_1 = e \cdot w \bmod q$ and $t_2 = r \cdot w \bmod q$.
 5. Compute $X = t_1 G + t_2 U$.

One can easily verify that our description is equivalent to the regular one. We also observe that instead as an alternative to $(r, s)$ one can also represent the signature as $(X, s)$ where $X \in \langle G \rangle$ is formed as in step 5 of Algorithm 2. Indeed, one can compute (a candidate) $r$ from the x-coordinate of $X$ as indicated in Step 7. One can easily verify that this will result in the same (valid) signature one started with. Note that $X$ takes the form $kG$ for some $k \in \mathbb{F}_q$ by Step 3 of Algorithm 1. The point $X$ holds more information than the original $r$ which shall be beneficial in Section 5.6.5.

We now specify Split-ECDSA. The context of this is the similar to that of regular ECDSA. The difference is that in the Split-ECDSA the user possesses another secret $\sigma \in \mathbb{F}_q^*$, called the *split secret*, next to its private key $d$. In Split-ECDSA the user public key takes the form

$$U' = \sigma \cdot U = \sigma \cdot u \cdot G. (2)$$

Split-ECDSA signature generation is different from regular ECDSA signature verification but Split-ECDSA verification is not. That is, Split-ECDSA verification with respect to $U'$ corresponds to regular ECDSA verification with respect to $U'$. That is, relying party will not see the difference between a Split-ECDSA signature and a regular ECDSA signature. In Algorithm 3 we have specified Split-ECDSA signature generation.

**Algorithm 3:** Split-ECDSA signature generation

Input: message $M$, private key $u$, split secret key $\sigma$.
Output: Signature $(r,s)$.

1. Compute $H(M)$ and convert this to an integer $e$.
2. Compute $e' = \sigma^1 \cdot e \bmod q$.
3. Select $k \in_R [1, q - 1]$.
4. Compute $kG = (x,y)$ and convert $x$ to an integer $\bar{x}$.
5. Compute $r = \bar{x} \bmod q$. If $r = 0$ then go to Step 1.
6. Compute $s_0 = k^{-1}(e' + u \cdot r) \bmod q$. If $s = 0$ then go to Step 3.
7. Compute $s = \sigma \cdot s_0 \bmod q$.
8. Return signature $(r,s)$.

That the Split-ECDSA signature $(r, s)$ of $M$ is indeed an ECDSA signature with respect to $U'$ is easily verified. Indeed, s takes the form $\sigma \cdot k^{-1}(e' + u \cdot r) \bmod q$ which is equal to $k^{-1}(e + \sigma \cdot u \cdot r) \bmod q$ as $\sigma \cdot e' = e$. It follows that $(r,s)$ is an ECDSA signature of $M$ with respect to public key $\sigma \cdot u \cdot G$ which is equal to $U'$.
Another, somewhat more elaborate, verification of this property consists of following Algorithm 2 for the signature $(r, s)$ returned by Algorithm 3 with public $U'$. To this end,
**[0072]** To this end, $(r,s)$ is an ECDSA signature with respect to $e'$ and private key $u$ with public key $U = u \cdot G$. By inspecting Algorithm 2 it follows that $r$ is equal to the x-coordinate of

$$e' \cdot s_0^{-1}G + r \cdot s_0^{-1}U = e \cdot \sigma^{-1} \cdot s_0^{-1}G + r \cdot s_0^{-1}U$$

$$= e \cdot s^{-1}G + r \cdot \sigma \cdot s^{-1}U$$

$$= e \cdot s^{-1}G + r \cdot s^{-1}(\sigma \cdot u \cdot G)$$

The first equality follows as $e' = \sigma^1 \cdot e \bmod q$ the construction in Line 2 of Algorithm 3. The second equality follows as $s_0^{-1} = \sigma \cdot s^{-1} \bmod q$ which directly follows from the construction in Line 7 of Algorithm 3. The last equality follows from a direct verification and the definition of public key U. It follows that $(r,s)$ is a ECDSA signature on the hash of the message based on private key $u \cdot \sigma \bmod q$.
What makes Split-ECDSA signature generation interesting is it enables separation of the environments where Steps 3-6 are performed and where Steps 1-2 and 7 are performed. Steps 3-6 can be performed in the SCE and Steps 1-2 and 7 in the AE. Note that this requires that the cryptographic device supports generation of ECDSA signatures based on pre-computed hash values which is often the case. See the discussion following Algorithm 1.

### 3.3. PIN-Binders

In our application of Split-ECDSA the split secret $\sigma$ will be based on the user PIN. To further mitigate brute-force we require a *PIN-Binder*. This is a keyed one-way function

$$PB_K(.): \{0, 1, ..., 255\}^L \rightarrow \mathbb{F}_q^* (3)$$

where $K$ is a secret/private key and where $L$ denotes the PIN length. A PIN-Binder function has the following properties:

1. it practically infeasible to invert $PB_K(.)$ other than through brute-force, i.e. by making a table of all PIN and their $PB(.)$ values.

2. it can only be computed with the cryptographic key $K$, i.e. brute-forcing a PIN $P$ based on its $PB_K(P)$ is practically not feasible without $K$.

The idea is that the key $K$ is maintained in an SCE, i.e. in a non-exportable fashion and (a fundamental part of) the $PB_K(.)$ calculation takes place inside this environment. In this way, the $PB_K(.)$ calculation is strongly bound to the secure environment, i.e. without the secure environment the function $PB_K(.)$ cannot be computed. The PIN-Binder is called from the *Application* Environment. In the algorithms below we have indicated by {SCE} which part of the PIN-Binder algorithm takes place inside the SCE.

We note that the calculation inside the SCE can be iterated, using the SCE output as part of a new calculation inside the SCE. This arranges that the time it takes to compute the PIN-Binder is configurable, e.g. can be set to one second. This allows for further resistance against brute-force attacks.

The PIN-Binder generation methods used will all be based on the output of a pseudorandom function considered as an integer and taken modulo $q$. To avoid that the output is zero and to mitigate statistical incorrectness we follow [BSI-03111]. Here one generates a byte array $H$ of $|q|_B + 8$ pseudorandom bytes, interprets that as an integer $h$ and returns $1 + (h \bmod (q - 1))$ as the output. This construction always leads an non-zero integer modulo q and the generation of the 8 more bytes mitigates the effect of statistical incorrectness.

In the discussion below, $H(.)$ is a secure hash function with an output length equal to $|q|_B + 8$ bytes. Such a hash function can typically be constructed by taking a hash function with a larger output size and truncating it. See [NIST-180-4].

A straightf or ward way to construct a PIN-Binder is using an SCE that supports HMAC [NIST-800-198-1] or CMAC [NIST-800-38B] as we can based the PIN-Binder directly on [NIST-800-108].

**Algorithm 4**: PIN-Binder based on HMAC

Input: PIN array $P$, HMAC key $K$ in SCE.

Output: PIN-Binder key $PB_K(P)$ in $\mathbb{F}_q^*$ .

1. {SCE} Derive a byte array A of $|q|_B + 8$ bytes from $P$ and $K$ using the HMAC based technique of [NIST-800-108].
2. Convert $A$ to an integer $h$.
3. Return $1 + (h \bmod (q - 1))$ as the PIN-Binder output.

**Algorithm 5**: PIN-Binder based on CMAC

Input: PIN array $P$, CMAC key $K$ in SCE.

Output: PIN-Binder key $PB_K(P)$ in $\mathbb{F}_q^*$ .

1. {SCE} Derive a byte array A of $|q|_B + 8$ bytes from $P$ and $K$ using the CMAC technique of [NIST-800-108].
2. Compute $H(A)$ and convert this to an integer $h$.
3. Return $1 + (h \bmod (q - 1))$ is the PIN-Binder output.

As the CMAC operation is based on a block cipher it can be inverted in principle, conflicting with the first property of a PIN-Binder. The hashing in Step 2 precludes this inversion.

The current "hardware backed Android keystore" supports the HMAC algorithm so Algorithm 4 can be used in that context. At the time of writing it does not support CMAC so Algorithm 5 cannot be used. The current "hardware backed Android keystore" does support AES in various encryption modes including the basic Electronic Code Book (ECB) mode, i.e. LAES). In the following algorithm we indicate how a PIN-Binder can be constructed based on AES-ECB. This algorithm is limited to PIN of length 15 which in practice should not be a limitation. Variants using other encryptions modes, such as CBC, can also easily be constructed also addressing the PIN length limitation. Compare [NIST-MODES].

**Algorithm 6**: PIN-Binder based on AES-ECB

Input: PIN array $P$ of length not exceeding 15, AES key $K$ in SCE.

Output: PIN-Binder key $PB_K(P)$ in $\mathbb{F}_q^*$ .

1. For a positive integer $i$, let $P_i$ the 16 byte array consisting of $P$ appended with zero bytes and last byte equal to the byte value of $i$.

2. Let $L = \lceil (\lceil q \rceil_B + 8)/16 \rceil$

3. Let $I = P_1 \| P_2 \dots \| P_L$.

4. {SCE} Encrypt $I$ under the key $K$ in ECB mode resulting in byte array $O$.

5. Compute $H(O)$ and convert this to an integer $h$.

6. Return $1 + (h \bmod (q - 1))$ as the PIN-Binder output.

The integer $L$ in Step 2 corresponds to the minimal number of AES blocks required to achieve a total of $\lceil q \rceil_B + 8$ bytes or more. In the above example we have shown how a AES encryption function can used to form a PIN-Binder. One can also use an AES decryption function for this but this requires some care. In most AES encryption modes arbitrary ciphertext will not successfully decrypt. Most encryption modes add extra information ('padding') to the plaintext prior to encryption. Padding is done to ensure that the plaintext size is an integer multiple of the AES block size (16 bytes) but also as a rudimentary integrity check. During decryption it is verified that correct padding was performed and if this is not the case an error is returned. This means that one cannot AES decrypt arbitrary byte arrays. This can be remedied by ensuring that the PIN based byte array is an integer multiple of the AES block size (16 bytes) and by using a non-padded AES encryption mode.

Another example of how a PIN-Binder can be based on a SCE is using its asymmetric decryption capabilities. The simplest method for this is using the Diffie-Hellman capabilities of the SCE. Here one simply generates a Diffie-Hellman public-private keypair, e.g. $X = xG$ inside the SCE allowing it to compute (a key from) the shared Diffie-Hellman key $xyG$ by offering the SCE the element $Y = yG \in \langle G \rangle$. See [STINSON]. Now by embedding the user PIN into the group $\langle G \rangle$, e.g. as point P and offering this to the SCE as input to the Diffie-Hellman one obtains (a key from) $xY$ which can be used to derive a PIN-Binder key from. There are many methods known for embedding a string or a byte array into an elliptic curve group of points. Note that in this application one does not need to know the discrete logarithm of $Y$ with respect to $G$ as is normally required in the Diffie-Hellman key exchange protocol. One can also base a PIN-Binder on the textbook RSA decryption capabilities of the SCE. See [STINSON]. In the RSA cryptosystem the public key consists of the product $n$ of two large prime number $p$, $q$ and public exponent $e$ usally taken as $2^{16} + 1 = 65537$ and the private key consists of a number $d = e^{-1} \bmod (p - 1)(q - 1)$. Textbook RSA encryption, respectively decryption, consists of the functions $x \to x^e \bmod n$, respectively $x \to x^d \bmod n$. Textbook RSA is not normally used in practice as it is not resistant against so-called chosen ciphertext attacks. To remedy against this kind of attacks redundancy ("padding") needs to be added to plaintext prior to encryption that is checked against as part of decryption. Most cryptographic libraries/API for RSA allow the configuration of a "PADDING_NONE" mode facilitating textbook RSA. In this way flexible support for various kinds of other padding is provided to developers. We can then construct a PIN-Binder as sketched below. This starts with the generation of an RSA key in the SCE of appropriate size, e.g. a modulus $n$ with bit length $|n| = 2048$ bits, i.e. 256 byte.

**Algorithm** 7: PIN-Binder based on textbook RSA

Input: PIN array $P$, RSA private key d in SCE.
Output: PIN-Binder key $PB_K(P)$ in F^.

1. Let $P_1$ be a copy of $P$ supplemented with one byte of value 1.

2. Concatenate a number of copies of $P_1$ in the AE until a byte array C exceeding length $|n|_B$ is formed,

3. Form byte array $C_1$ by truncating C, to $|n|_B$ bytes.

4. Convert $C_1$ this to an integer $c_1$ and compute $c_2 = c_1 \bmod n$.

5. {SCE} Compute textbook RSA decryption resulting in $c_3 = c_2^d \bmod n$.

6. Convert $c_3$ to a byte array $c\_4$, compute $H(c_4)$ and convert this to an integer h.

7. Return $1 + (h \bmod (q - 1))$ as the PIN-Binder output.

The byte of value 1 is a non-printable byte and can thus not occur in $P$. This means that the construction in Step 2 leads to different results for different PINs. The RSA decryption operation in Step 5 can be inverted with the public key in principle, conflicting with the first property of a PIN-Binder. The hashing in Step 6 precludes this inversion.

As Android based devices typically provide for AES, HMAC and textbook RSA in their SCE they allow for various PIN-binding mechanisms. However, Apple (e.g. iOS, macOS) based devices, do not provide for either of those algorithms. Apart from ECDSA signatures, Apple based devices typically only provide authenticated encryption an decryption, most notably ECIES see [HANKERSON]. This means that the SCE will only return plaintext if the ciphertext is properly formed. In other words, feeding an ECIES decryption function with arbitrary ciphertext will typically result in errors and not in useful responses. This resembles the padding situation discussed above on using an AES decryption operation to base a PIN-Binder on. However, this could be easily resolved there by using non-padded decryption. One can also base a PIN-Binder on ECIES decryption but this takes somewhat more effort.

We first explain the basic working of ECIES encryption/decryption following [HANKERSON]. For simplicity our description we limit ourselves again to on an elliptic curve with co-factor 1. This is the case in commonly used elliptic curves such as those in [BRIAINPOOL], [SEC-2] and [DSS]. We note that Apple based devices only support the curves from [DSS]. Moreover we do not take the sender's ephemeral key as part of the key derivation which is also the case on Apple based devices. Our constructions are also possible when these limitations apply but the formula become somewhat more complex.

Similar to the ECDSA setup, a user has a private key $d \in \mathbb{F}_q^*$ and a public key D = *dG.* Part of an ECIES implementation is an encryption algorithm Enc(K,.) with corresponding decryption algorithm Dec(*K,.*) and a message authentication code algorithm MAC (*K,.*). In all algorithms K represents a key appropriate for the algorithm.

The message authentication code algorithm can be based on a block cipher, e.g. [NIST-800-38B], or on a hash function, e.g. [NIST-800-198-1]. As we discuss below, modern ECIES implementations including those of Apple combine the encryption and message authentication algorithm. Part of an ECIES implementation is also a Key Derivation Function *KDF(.),* That takes as input a two elements of the group (G) and returns two secret keys ($k_{ENC}$, $k_{MAC}$) that fit the encryption/decryption and a message authentication code algorithm in the ECIES implementation. In Algorithms 8, 9 we have sketched the working of ECIES encryption and decryption respectively.

**Algorithm** 8: ECIES encryption

Input: message *M*, public key *D.*
Output: Encrypted message *(R,* C, *t).*

1. Select $k \in_R$ [ 1, *q* - 1 ].
2. Compute R = *kG* and Z = *kD.*
3. Compute *KDF(Z)* = ($k_{ENC}$, $k_{MAC}$)
4. *C* = Enc($k_{ENC}$, M) and t = MAC ($k_{MAC}$, *C*).
5. Return (*R,* C, *t).*

The elliptic curve point R in Line 2 is known as the *ephemeral key* and the point Z is known as the *Diffie-Hellman shared key.* Compare [STINSON].

**Algorithm 9:** ECIES decryption

Input: encrypted message *(R,* C, *t),* private key d.
Output: Plaintexts message m or rejection of the encrypted message.

1. Compute and Z = dR.
2. Compute *KDF(Z)* = ($k_{ENC}$, $k_{MAC}$)
3. Compute *t'* = MAC ($k_{MAC}$, C) if *t'* $\neq$ *t* reject the encrypted message.
4. Compute *m* = Dec($k_{ENC}$, C).
5. Return m.

The elliptic curve point Z in Step 2 of Algorithm 8, coincides with the point Z from Step 1 in Algorithm 9. This effectively is an execution of the Diffie-Hellman key exchange protocol, cf. [STINSON].
It follows that one will only get useful data in Algorithm 9 if the input C passes the Step 3 of Algorithm 9. To arrange for this in our PIN-Binder construction, one generates a random ephemeral key *R* in the Application Environment, computes $k_{MAC}$ and stores *R* and $k_{MAC}$ in local storage. These two values now enable to form for each byte array C a valid triplet *(R,* C, t) that can be offered for ECIES decryption. Indeed, with $k_{MAC}$ one is able to calculate the value t allowing to pass Step 3 of Algorithm 9. Step 4 of Algorithm 9 will only result in non-erroneous output if the ECIES symmetric encryption/decryption does not use padding which is usually the case. Moreover, this will only lead to secure PIN-binding if the key $k_{ENC}$ can not be derived from $k_{MAC}$ which is always the case.

We further elaborate on this method in the context of Apple (e.g. iOS, macOS) based devices. Here ECIES implicitly uses a message authentication code algorithm as it is based on AES-GCM, i.e. an authenticated encryption mode. Effectively only an AES-GCM encryption $K$ key and an initialisation vector is formed in Step 3 of Algorithm 8. As part of the AES-GCM operation a core encryption key $k_{ENC}$ and a message authentication key $k_{MAC}$ are formed from K. More specifically, the encryption key $k_{ENC}$ is used in AES-GCTR for encryption. Next to an AES-key, this mode takes an initialisation vector as input. During its operation it AES encrypts 16-byte blocks (the AES block size) holding a incrementing sequence number starting with an initialisation vector. These encrypted blocks are then XOR-ed with the plaintext. Decryption is similar to encryption. GCTR does not use padding implying that it accepts any ciphertext. The key $k_{MAC}$ is used in GMAC to generate a message authentication code on the message encrypted with GCTR. We actually have $k_{MAC} = AES(K, 0^{128})$ where $0^{128}$ is the all zero AES block. So similar as discussed above the key $k_{ENC}$ cannot be derived from the key $k_{MAC}$ (although the reverse does not hold).

We can now sketch a PIN-binding algorithm in the ECIES context based on AES-GCM. This starts with the generation of an ECIES private key $d \in \mathbb{F}_q^*$ and corresponding public key $D = dG$ in the SCE. The public key D is sent to the AE. Next one generates a k $\in_R$ [1, $q$ - 1] in the AE, forms the ephemeral key $R = kG$ and the shared key k . D, the AES-GCM key $K$ and then the GMAC key $k_{MAC} = AES(K, 0^{128})$. All data except $R, k_{MAC}$ are deleted.

**Algorithm 10: PIN-Binder based on ECIES-GCM**

Input: PIN array $P$, ephemeral key $R$ and message authentication key $k_{MAC}$ in AE, ECIES private key $d$ in SCE.

Output: PIN-Binder key $PB_K(P)$ in $\mathbb{F}_q^*$ .

1. For a positive integer i, let $P_i$ the 16 byte array consisting of $P$ appended with zero bytes and last byte equal to the byte value of $i$.

2. Let $L = \lceil ([q]_B + 8)/16 \rceil$

3. Let C. = $P_1 \| P_2 \dots \| P_L$.

4. Calculate t = GMAC ($k_{MAC}$, C)

5. Form ECIES ciphertext (R, C, t).

6. {SCE} Offer (R, C, t) to SCE for decryption resulting in byte array $O$.

7. Compute $H(O)$ and convert this to an integer h.

8. Return 1 + ($h$ mod (q - 1)) as the PIN-Binder output.

We remark that we can additionally encrypt $P, k_{MAC}$ using the SCE in another ECIES application, allowing an additional security layer.

**4. *Method for a strong Authenticator* in *centralized approach***

*4.1. Introduction*

We introduce some terms allowing convenient description of the methods on which the Authenticator application A-APP is based.

The AP will manage one or more Certificate Authorities (CAs) and related certificate management systems administrating related information, e.g. on certificate status. We assume there mechanisms are in place providing the user/A-APP with the related CA verification certificates in a trusted fashion. That is, the user/A-APP can validate that a certificate is indeed issued by a CA managed by the AP. This could for instance be arranged by letting the CA verification keys be signed by root public key that is trusted by the user platform and by placing copies of the CA public key certificates in the A-APP.

Included in the A-APP is a public key certificate A issued by an AP managed CA that allows the A-APP encrypting an arbitrary number of data elements {$D\_i$} for the AP protecting confidentiality and preferably also authenticity. This will be denoted as $Enc_A$ ({D_i}). We assume that this encryption arranges for injective representation of its input allowing unambiguous decryption. It might be convenient to base $Enc_A$ (.) on ECIES see [HANKERSON]. This encryption can (and typically will) take place in Authenticator Application environment, i.e. in software, allowing for flexible implementation. We let A denote the range of $Enc_A$ (.).

We next introduce three types of public-private key pairs:

- An *SCE public key* is of type $U_S = u_S \cdot G \in \langle G \rangle$, where the *SCE private key* $u_S$ resides in SCE in a non-exportable fashion only usable by an Authenticator application A-APP to generate (split) ECDSA signatures on messages.

- A *Raw Authenticator* public key is one of type $U_P = K_P - U_S \in \langle G \rangle$ where $K_P$ is PIN-Binder key based on a PIN-Binder *PB* and a PIN *P* and where $U_S$ is an SCE public key. The corresponding *Raw Authenticator* private key is equal to $K_P \cdot u_S$.

- A *Randomized Authenticator* public key takes the form of a quadruple $(U_R, E, r, s)$ where $U_R = R \cdot U_P = R.K_p \cdot U_S \in \langle G \rangle$ where $U_P$ is a Raw public key and $R \in_R \mathbb{F}_q^*$. The corresponding private key is equal to $u_R = R \cdot u_P = R.K_P \cdot u_S$. Moreover, $A \ni E = \text{Enc}_A (R)$ and $(r, s)$ is a pair of integers representing an ECDSA signature over $U_R$ and $E$ using Split-ECDSA (Algorithm 3) with private key $u_S \in \mathbb{F}_q^*$ and split secret $R \cdot K_P \in \mathbb{F}_q^*$. The element $R \in \mathbb{F}_q^*$ is called the *randomization factor*. Note that the AP can decrypt $R$ from $E$ and derive the Raw key from the Randomized key as $R^{-1} \cdot U_R$.

A mechanism to publicly make verifiable that two Randomized Authenticator public keys $P_1$, $P_2$ belong to the same SCE (and thus user) is important in our discussions. To this end, suppose we have to two Randomized Authenticator public keys $P_1$, $P_2$ belonging to two potentially different SCEs $S_1$, $S_2$ and users. Suppose that each SCE has proven possession of the corresponding private key, e.g. by having signed a random message. Also assume that one of the users or the AP can prove it knows an $x \in \mathbb{F}_q^*$ such that that

$$P_1 = x \cdot P_2. \ (4)$$

In that case we conclude that the two SCEs (and thus the users) must coincide. For this we offer an informal reasoning, arguing by contradiction. This reasoning can be made more formal. Suppose we could construct a situation where the above could occur with different SCEs. Then we could use this construction with one real SCE and a simulated SCE that would allow for extraction of its private keys. Using Formula (4) we would then be able to extract the private key of the real SCE as well, what we assumed not to be possible.

Using the techniques from [SCHNORR] anyone knowing an $x \in \mathbb{F}_q^*$ satisfying Formula (4) can easily transform this into a non-interactive proof of knowledge (PoC) using the techniques from [FIAT] allowing allows public verification of Formula (4) without losing secret information on x.

### 4.2. *Authenticator issuance*

The issuance process starts by the user installing an Authenticator Application (A-APP). We assume that mechanisms are in place whereby the user can assess the trustworthiness of A-APP. For instance, A-APP could be digitally signed and/or the user could download the A-APP from of trusted APP stores of Google or Apple. We also assume that the A-APP is able to set up a secure session with the AP, e.g. by using a TLS session based on a TLS server certificate issued to the AP. The required TLS certificate and the PKI certificate hierarchy proving its trustworthiness could be provided by the Operation System or could be stored in the local storage of the A-APP.

Next the user instructs the A-APP to commence the Authenticator issuance process. The A-APP then generates a fresh SCE key pair and a fresh PIN-Binder $PB_K(.)$ for some K securely generated and stored in the SCE. The A-APP asks the user to choose a PIN. The A-APP uses the PIN to generate a PIN-Binder key $K_P$. Next the A-APP generates a Raw key pair related to the SCE pair and the PIN-Binder Key $K_P$. The A-APP next generates a fresh Randomized Authenticator public key $(U_R, E, r, s)$ and registers that at the AP. Here the A-APP proves possession of the corresponding private key $u_R$ using Split-ECDSA (Algorithm 3) with private key $u$ and split secret $R \cdot K_P$ where $R$ is the randomization factor used. The generation of the signature $(r, s)$ as part of the Randomized public key can suffice to prove such possession but this can be done explicitly too.

The AP validates Randomized Authenticator public key by verifying the signature using $U_R$ and by verifying that $E$ is properly formed.

Next user identity proofing takes place, leading to some verified user information $I_U$. This information could for instance be a name, a social security number, a pseudonym or encrypted information under $\text{Enc}_A(.)$.

The AP issues a certificate Cert on $U_R$ which also includes the user information $I_U$. The AP registers both the certificate as ($U_R$, $E$, r, s) in its certificate management system. The certificate Cert is also provide to the A-APP and stored inside its local storage. The A-APP deletes all sensitive/secret information in its memory/local storage, e.g. the PIN, randomization factor R and PIN-Binder key $K_P$.

As part of the registration/certification issuing process the AP provides the user A-APP with a User-ID allowing opening a user account and registering information on the user and/or the A-APP. At the start of communication between the user A-APP and AP this User-ID is sent allowing the AP to recognize the user/A-APP and to lookup information on the user and/or the A-APP. Part of the register information is PIN-Counter holding the number of false PINs used by the user. Initially the PIN-Counter is set to zero.

The AP arranges that the user is able to revoke or suspend its certificate Cert and (consequently) its Authenticator. This for instance could be based on providing the user with a Revocation Passphrase.

### 4.3. *Digital Signing*

The user together with the issued A-APP can now sign a message *M* for the AP as follows. The A-APP generates a new randomization factor R' and Randomized Authenticator public key *($U_R$', $E$', r', s')* and signs message *M* using Split-ECDSA (Algorithm 3) with private key *u* and split secret *R'* - $K_P$. The certificate Cert, the new Randomized Authenticator public key and the signature are sent to the AP. The A-APP deletes all sensitive/secret information in its memory/local storage, e.g. the PIN, randomization factor *R'* and PIN-Binder key $K_P$.

The AP verifies that the certificate Cert is valid, i.e. properly signed and issued and is not revoked or suspended. The AP verifies the signature on message *M* using $U_R$' using standard ECDSA signature verification, cf. Algorithm 2. Next the AP verifies that the new Randomized Authenticator public key *($U_R$', $E$', r', s')* is also correctly formed, i.e. that the signature (r', s') is correct and that $E$' is correctly formed. Next the AP looks up the Randomized Authenticator public key ($U_R$, $E$, r, s) in its certificate management, system on which the certificate is based. The AP also looks ups the user PIN-Counter belonging to the A-APP. If this exceeds a certain threshold, e.g. 5, the APP rejects the signature.

The AP verifies that both the new as the registered Randomized public key correspond to the same Raw Authenticator public key by decrypting R (respectively *R*') from E (respectively *E*') and by verifying that

$$R^{-1} \cdot U_R = R'^{-1} \cdot U_R' \quad (5)$$

or alternatively and equivalently

$$R' \cdot U_R = R \cdot U_R'.$$

If this Equation (5) holds, the AP concludes that the user has used the correct PIN and the PIN-Counter is set to zero. If this is not the case, the PIN-Counter is incremented with one and stored in the user account belonging to the A-APP.

We use the Randomized Authenticator public keys for each digital signature instead of the (encrypted) Raw Authenticator public key itself to securely allow dispute handling. See Section 4.6. A Raw Authenticator public key together with access to the A-APP environment, would allow brute forcing the PIN. So a Raw Authenticator public key can be considered security sensitive and it is not appropriate to provide to third parties. A Randomized Authenticator public key can be provided to third parties, as long as the used randomization factor is kept secret,

### 4.4. Authentication

The user can authenticate to the AP by digitally signing a fresh random nonce generated and sent by the AP to the user and it's A-APP as indicated in Section 4.3, When the AP has assessed that this nonce is properly signed as indicated in Section 4.3, the AP can consider the user authenticated under the information $I_U$ retrieved from the certificate Cert. The use and management of the PIN -Counter is similar as indicated in Section 4.3.

### 4.5. *PIN* change

The handling of the Authenticator PIN takes special care. This is related to the required functionality that the user should be able to change her PIN without reperforming the issuing/ identity proofing process.

If the user want to change its Authenticator PIN he proceeds as follows in interaction with the A-APP and AP.

The A-APP generates a new PIN-Binder and a new PIN-Binder key $K_{\overline{P}}$ based on the new PIN $\overline{P}$. Next the A-APP generates a corresponding new Raw Authenticator public key of type $Up = K_P - U_S$. This is based on the new PIN-Binder key $K_{\overline{P}}$ but still based on the existing SCE key pair ($U_S$, $u_s$). Next, the A-APP generates a Randomized Authenticator public key $U_{\overline{R}} = \overline{R} \cdot K_{\overline{P}} - U_S$ related to the new Raw Authenticator public key, forms ($U_{\overline{R}}$, $\overline{E}$, $\overline{r}$, $\overline{s}$) and registers at the AP by signing that using the previously registered Randomized Authenticator public key including a message Consent consenting in the PIN change.

That is, the A-APP generates a Randomized Authenticator public key $R' \cdot K_P \cdot U_S$ related to the current registered Raw Authenticator public key and signs the new Randomized Authenticator public key and Consent with the private key corresponding to $R' \cdot K_P \cdot U_S$. Also, the A-APP generates a proof that both Randomized Authenticator public key belong to the same SCE as indicated above. For this the A-APP uses the techniques from [SCHNORR] to form a proof of knowledge PoC for the AP that the A-APP knows a

$$y \in \mathbb{F}_q^*$$

such that

$$U_{\overline{R}} = y \cdot U_R \quad (6)$$

and sends this to the AP. The A-APP can do this as,

$$y = \overline{R} \cdot K_{\overline{P}} \cdot R'^{-1} \cdot K_P^{-1}$$

satisfies Formula (6) and is known by A-APP. The AP stores the PoC in its certificate management system. The A-APP deletes all sensitive/secret information in its memory/local storage, e.g. the PINs, randomization factors, PIN-Binder key $K_P$ and the PoC.

### 4.6. Dispute handling

Suppose a signature on a message $M$ related to a Randomized Authenticator public key ( $U_R'$, $E'$, $r'$, $s'$) is disputed, e.g. in court, the AP can proceed as follows to resolve this. First assume that the signature was based on the first PIN used by the user. Let ($U_R$, $E$, $r$, $s$) be the Randomized Authenticator public key that was registered. It follows from Formula (5) that,

$$U_R = R \cdot R'^{-1} \cdot U_R'$$

As the AP can decrypt $R$, $R'$ from $E$, $E'$ respectively it knows $R \cdot R'^{-1}$. Consequently the AP can use the techniques from [SCHNORR] to generate a zero-knowledge proof of knowledge PoC showing that the AP knows a secret x such that

$$U_R = x \cdot U_R' \quad (7)$$

where $U_R$ is part the registered Randomized Authenticator public key ($U_R$, $E$, $r$,$s$).

By providing the certificate Cert and the PoC to the court can prove that $U_R$ and $U_R'$ belong to the same user. If the message was signed with a changed PIN, the AP can proceed as above, proving that the message must be signed by the private owner of the registered Randomized Authenticator public key corresponding to the PIN. In addition, the AP can use the transcripts formed during PIN change (see Section 4.5) to prove that the registered Randomized Authenticator public-private key pair was in possession of the same user as the previous one. This process then ends with the Randomized Authenticator public key that is part of the issued certificate Cert. The AP finally proves that its certificate issuing processes are sufficient to prove that the certificate Cert was indeed issued to the user. This proof can for instance be based on following [ETSI-319 411] and handing a proof of conformity on this from an independent auditor.

### 5. Variations and *extensions*

5.1. *Randomized Split-ECDSA generation with implicit hash pre-computation*

In the basic Split-ECDSA Algorithm (Algorithm 3) we used that most cryptographic libraries and Application Programming Interfaces (APIs) for ECDSA allow taking as input the hash of the message thereby allowing pre-computing of that hash outside the device (SCE) actually generating the ECDSA signature. However, some libraries/APIs do not allow for this, most notably the library used in FIDO, cf. [FIDO], [WebAuthn], and the W3C Web Cryptography API [WebCrypto]. The first library/API was already discussed in Section 1.4. The latter specifies the native support of various cryptographic algorithms from within an internet browser through JavaScript. W3C Web Cryptography API supports most standard algorithms including ECDSA, RSA, HMAC and AES. $W_3C$ Web Cryptography API is implemented in all major web browsers.

When a cryptographic library/API does not support ECDSA signatures based on pre-computed hash we cannot execute (only) Steps 3-6 of Algorithm 3 inside the Secure Cryptographic Environment (SCE) as this only accepts the message $M$ itself. This thus excludes using of basic Split-ECDSA in this context, i.e. with only a Raw Authenticator public key as described in Section 4. However, the support of a Randomized Authenticator public key is still possible. For this one proceeds as indicated in Algorithm 8 below.

**Algorithm 8:** Split-ECDSA signature generation with randomized authenticator public key

Input: message $M$, private key $u$, split secret key $\sigma$.
Output: Randomization factor $R$ and signature $(r,s)$ for private key $u \cdot \sigma \cdot R$

   1. Generate a cryptographically random string $S$
   2. Compute $H(S)$ and convert this to an integer $h_S$
   3. If $h_S$ mod $q = 0$ then go to Step 1,
   4. Generate an ECDSA signature $(r_0, s_0)$ on string $S$ based on private key $u$
   5. Compute $H(M)$ and convert this to an integer $h_M$.
   6. Compute $\delta = h_M/h_S$ mod $q$ and $R = \dfrac{\delta}{\sigma} \bmod q$ .
   7. Compute $s = s_0 \cdot \delta$ mod $q$
   8. Return randomization factor $R$ and signature $(r_0,s)$.

A straightforward computation shows that the number $s$ in Step 7 of Algorithm 8 is equal to

$$k^{-1}(h_M + u \cdot \delta \cdot r_0) \bmod q.$$

That is, $(r_0,s)$ is an ECDSA signature of message $M$ corresponding to the private key $u \cdot \delta$. By construction of the randomization factor $R$ this private key is equal to $u \cdot \sigma \cdot R$.

In the context of Section 4, the split secret key $\sigma$ is equal to a PIN-Binder key $K_P$ is based on a PIN-Binder $PB$ and a PIN $P$. That is, the randomized public key corresponding to Algorithm 8 is equal to $U_R = u \cdot \sigma \cdot R \cdot G = R \cdot U_P = R \cdot K_P \cdot U_S$ where $U_S$ is the SCE public key and $U_P$ is the raw authenticator public. As also indicated in Section 4, the randomization factor $R$ needs to be sent to the verifying party in a protected form.

We already remarked that the $W_3C$ Web Cryptography API next to ECDSA also supports ECDSA, RSA, HMAC and AES implying that the PIN binder constructions from Section 3.3 also can be used in the context of $W_3C$ Web Cryptography API. We also note that the $W_3C$ Web Cryptography also supports keys that are not extractable from the key storage.

This allows for a two factor authenticator that is bound to the $W_3C$ Web Cryptography API key storage through both the possession as the knowledge factor. The strength of this binding depends of the (hardware) protection given by the underlying browser implementation. If this is based on proper hardware then this binding is strong. With respect to such hardware one can think of a "hardware backed keystore" in Android context and of the "Secure Enclave" in Apple context, cf. Section 2. We note that [FIDO] and its successor [WebAuthn] also allow for confidentiality algorithms implying that the same situation occurs in that context. If a (hardware based) FIDO token only supports ECDSA then one could base the possession factor on that and the knowledge factor on the $W_3C$ Web Cryptography API. This still would be considered strong.

We also note that in Windows context one can also make use of the Trusted Platform Module (TPM) that is typically present on high-end personal computers and laptops and that also supports most standard algorithms including ECDSA. Compare [ISO-11889].

### 5.2. *Attestation*

Some SCEs, e.g. the hardware backed Android KeyStore, support *attestation* allowing the SCE to convey to outside parties that a generated (ECDSA) is actually generated in a (trusted) SCE in a non-exportable fashion. This typically works by letting the generated key be wrapped inside a certificate generated by an existing private key inside the SCE on which the SCE provider has issued a certificate. By allowing the generated to include a challenge sent by an external party, freshness of the key can also be guaranteed to the external party. Attestation could be supplemented to the Authenticator issuance process in Section 4.2 on the SCE public key which would then be sent (wrapped into a certificate) to the AP. Compare https://developer.android.com/training/articles/security-key-attestation.

### 5.3. *Other digital signature algorithms allowing splitting*

The construction of Split-ECDSA and subsequent usage in a Strong Authenticator can also be based on other digital signature algorithms that allow feeding the signature generation algorithm with a pre-computed hash value. This for instance is the case for DSA (non elliptic curve variant ECDSA), EC-GDSA (Elliptic Curve German Digital Signature Algorithm) and EC-RDSA (Elliptic Curve Russian Digital Signature Algorithm) from [ISO-14888-3].

Although this obvious for anybody with basic mathematical knowledge, we write this out for completeness sake.

The DSA case is almost identical to the ECDSA case previously specified. The difference is that DSA is not set in an elliptic curve group but in the multiplicative subgroup of order $q$ modulo a prime number $p$. The signature is $(r,s)$ almost identically formed as in the ECDSA case. Here $r = (g^k \bmod p) \bmod q$ for a random integer $k$ and $s = k^{-1}(e + u \cdot r) \bmod q$ similar as in the case of EC-DSA. It directly follows that in this context one can form Split-DSA using the same formulae as in Split-ECDSA. specified in Algorithm 3.

In the EC-GDSA case the signature takes the same form $(r,s)$ as in ECDSA, the integer $r$ is formed in a similar way as in ECDSA. However, using the ECDSA notation, we have $s = u(r \cdot k - e) \bmod q$ in the situation of EC-GDSA. It easily forms that Split-EC-GDSA can be formed from Algorithm 3 by letting $e' = e$ and $s = \sigma \cdot s_0 \bmod q$. In this case we once again obtain an EC-GDSA signature $(r, s)$ relative to the private key $\sigma \cdot u \bmod q$ as in the ECDSA situation, which can be easily verified.

In the EC-RDSA case the signature takes the same form $(r, s)$ as in ECDSA, the integer $r$ is formed in a similar way as in ECDSA. However, using the ECDSA notation, we have $s = (r \cdot u + e \cdot k) \bmod q$ in the situation of EC-RDSA. It easily forms that Split-EC-RDSA can be formed the same as in Algorithm 3 i.e. by letting $e' = e \cdot \sigma^1$ and $s = \sigma \cdot s_0 \bmod q$. In this case we once again obtain an EC-RDSA signature $(r, s)$ relative to the private key $\sigma \cdot u \bmod q$ as in the ECDSA situation, which can be easily verified.

### 5.4. *Using biometric based keys in splitting*

Instead of using a key based from a user PIN one could, if the platform supports it, also store a key protected with a biometric characteristic of the user, e.g. a fingerprint. This key would then play the role of $K_P$ in the construction in Section 4 and would require that the user biometrically authenticates to the platform for digital signing.

### 5.5. *Use of Hardware Security Modules for privacy protection*

We could encrypt all information sent by the A-APP to the AP using $\mathrm{Enc}_A$ (.) including the certificate Cert. By letting all decryption and verifications be performed inside a separated, trusted environment within the AP, e.g. a Hardware Security Module (HSM), we could then provide additional privacy protection. Moreover, the certificate Cert could contain encrypted information only accessible within the HSM. This would allow the AP providing information to service providers as part of authentication in an encrypted fashion only accessible for the Service Provider and even not for the AP itself.

Instead of providing a digital signature and an authentication to the AP as described in Section 4 one can also provide these direct to an external party, e.g. a Service Provider. The result, i.e. a certificate Cert, a Randomized Authenticator public key and a signature could then be sent to the AP comparable to the setup of OCSP, cf. [RFC6960].

### 5.6. *Direct approach*

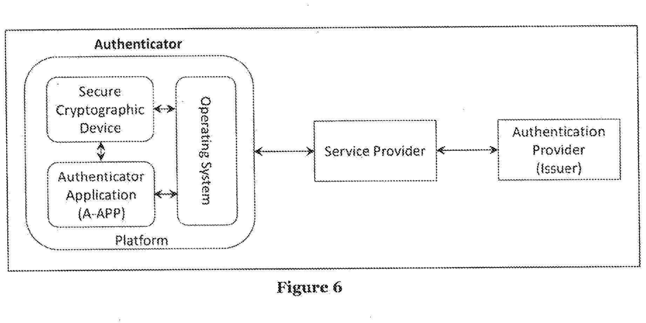

On the centralized method in Section 4 can easily base various variants in a direct authentication approach, i.e. where the Authenticator is used in direct interaction with a Service provider. The Authenticator is issued a certificate from a certificate issuer similar to as discussed in Section 4 but with some minor changes. Compare Figure 6.

5.6.1. *First direct variant*

As a first, very simple variant, one simply does not deploy Randomized Authenticator public/private keys, or in alternative words always chooses the randomization factor to be one, i.e. the unit element of $F_q$. That is, the certificate issuer issues a certificate Cert directly on the Raw Authenticator Key.

To allow for PIN change without certificate change required we replace the PIN-Binder Key $K_P$ with a fixed (but randomly chosen) $K \in F_q^*$ and store the element $S = K \cdot K_P^{-1}$ inside A-APP storage. During signing/authentication the user provides her PIN from which the PIN-Binder key $K_P$ is formed. Together with $S$ the A-APP then computes the static PIN-Binder key $K$ as $K_P \cdot S$ which can then be used to digitally sign messages for the Service provider, ef. Section 4.3, or authenticate towards the Service Provider, cf. Section 4.4, If the user want to change the PIN she generates a new PIN-Binder, a new PIN-Binder Key $K_p$, and forms a new element $S' = K \cdot K_{p'}$.

As part of signing of and authentication the A-APP sends along the certificate Cert to the Service Provider that binds the Raw .Authenticator Key to the user. The Service Provider could additionally query the issuer on the status of the certificate, i.e. whether it is revoked or suspended. This would then be similar to the setup of OCSP, cf. [RFC6960].

A privacy disadvantage of this approach is that is provides the certificate Cert to all Service Providers, allowing them linking the user. A security disadvantage of this approach compared to the approach of Section 4 is that the certificate Cert needs to be stored inside local storage which holds the user Raw Authenticator Key. If an attacker would be able to get hold of the Authenticator and obtain specialized access to the A-APP then in principle he would be able to mount a brute-force attack against the user PIN. For this he could proceed as follows:

- getting a copy of the user SCE public key $U_S$ from the SCE

- generate many PIN candidates P' and for each candidate let the PIN-Binder return the $K_{P'}$, then compute a candidate $K' = K_{P'} \cdot S$ and see if $K' \cdot U_S$ equals the Raw Authenticator Key. If this case then P' is the user PIN.

If this is a realistic scenario depends both on the additional security controls in A-APP.

One of the mitigation controls is that the time it takes to generate the PIN-Binder key $K_P$, can be controlled as indicated in Section 3.3. This means that if the A-APP requires that there are many user PINs possible, e.g. by letting it be a long passphrase instead of six digit string, one can control the time it takes for the attacker to find the PIN. To illustrate, suppose that each try takes about 1 second. Then a brute force approach has an expected run time of more than 17 years for a 5 digit PIN from an alphabet of 64 characters. This follows as

$$\frac{64^5}{2 * 3600 * 24 * 365} \approx 17$$

If the certificate is only valid for 3 years, then by the time the PIN is found it would be useless. Moreover, the user would typically have revoked its certificate within a few days and could be contractually forced to do so.

We note that in the approach of Section 4, the AP can follow a similar scenario but one can argue that the associated risk is generally accepted. Indeed, there are simpler ways for the AP to impersonate as the user as he can simply generate a fraudulent Authenticator named to a user. Moreover, it is generally accepted in PKI-smartcard based authentication, i.e. the strongest formed of authentication, that the issuer can produce a PIN Unlocking Key (PUK) for each of the cards issued. When the issuer gets hold of a user PKI-smartcard then with the corresponding PUK the issuer can (ab)use the card. That is, in this context the PUK cater for similar scenarios as discussed which are easier to implement too. In other words, if the classical PKI-smartcard protects against attackers with high attack potential in this context, then the Authenticators following from our techniques do.

5.6.2. *Second direct variant*

The second direct variant, is a variant of the first variant. There is a still a certificate Cert issued on the user Raw Authenticator Key but the certificate is directly encrypted by the A-APP following issuance and stored in the A-APP this way. Instead of sending the certificate in plaintext to the Service Provider, the A-APP sends the encrypted variant to the Service Provider. The Service Provider is still sent the Raw Authenticator Key (in plaintext) but is no longer able himself that this is bound by the certificate. For this, the Service Provider would then need to query the certificate issuer by sending both the certificate as the Raw Authenticator Key. The issuer then verifies if the certificate is valid and if it binds the Raw Authenticator Key. The issuer could also return user information from inside certificate. This would also be similar to the setup of OCSP, cf. [RFC6960].

The second direct variant has as security advantage over the first variant that there is no longer (plaintext) information in the A-APP storage allowing for a brute-force of the PIN by any attacker getting (physical) access to the A-APP. However, with the user Raw Authenticator Key given the Service Provider could proceed as the attacker in the first direct variant. This scenario seems far less likely.

The second direct, variant has the same privacy disadvantage as the first variant.

*5.6.3. Third direct variant*

The third direct variant, is a variant of the second variant. There is a still a certificate Cert issued on the user Raw Authenticator Key but the certificate is directly encrypted by the A-APP following issuance and stored in the A-APP this way. Instead of sending the certificate in plaintext to the Service Provider, the A-APP sends the encrypted variant to the Service Provider. In the third variant the Service Provider is no longer sent the Raw Authenticator Key but is sent a *SP-bound Authenticator Key*. This key resembles a Randomized Authenticator public key with the difference that the randomization factor $R$ is fixed and only depends of the identity of the service provider. Once can construct such a SP-Binder key in a similar way as the PIN-Binder Key. That is, the A-APP constructs an extra PIN-Binder (the name SP-Binder seems appropriate) and forms the SP-Binder key from the SP-Binder and the identity of the Service Provider. The A-APP additionally constructs a non-interactive proof of knowledge (PoC) as in Section 4.1 showing knowledge of the SP-Binder key with respect to the Raw Authenticator key. This PoC is also encrypted for the certificate issuer. As part of signing, the A-APP sends the signature, the SP-bound Authenticator Key (plaintext) and the certificate and PoC in encrypted form. The SP-bound Authenticator Key can now be used by the Service Provider as a pseudonym similar to the FIDO setup. Moreover, by sending the SP-bound Authenticator Key, encrypted certificate and encrypted PoC to the certificate issuer the Service Provider can obtain information on the status of the SP-bound Authenticator Key and optionally additional user information. Indeed, the issuer can obtain the certificate and verify if it is valid. The issue could also obtain the PoC and verify if this a valid proof of knowledge with respect to the provided SP-bound Authenticator Key and the Raw Authenticator key in the certificate.

The security of the third variant is comparable to the second variant but has better privacy properties as Service Providers no longer obtain the user Raw Authenticator key allowing linking the user over Service Providers. As the certificate issuer receives the user certificate from all Service Provider, he is able to link the visits of the user.

*5.6.4. Fourth direct variant*

The fourth variant is almost the same as the third variant. The only difference is that Service Providers also encrypt the SP-bound Authenticator Key for the certificate issuer. If then all cryptographic operations of the issuer take place in a separated, trusted environment within the AP, e.g. a Hardware Security Module (HSM), then the issuer is no longer able to link the user visits. This is comparable to the approach discussed in Section 5.5.

*5.6.5. Fifth direct variant*

In the fifth variant a certificate is issued on the Raw Authenticator Key that is encrypted in a specific, convenient fashion. During the certificate issuance process the AP generates a user specific, random scalar $a_U \in_R F_q$ and securely registers this under the account of the user, i.e. using the User-ID of the user. Next the AP computes the *certified* public keys of the user-. $G_c = a_U \cdot G \in \langle G \rangle$, $U_c = a_U \cdot U_P \in \langle G \rangle$ these public keys are included in a certificate also binding other user information, e.g. the user name. Next the AP forms uses the techniques from [SCHNORR] and [FIAT] to form a non-interactive proof of knowledge PoC showing the relation between $G_c$ and $U_c$, i.e. that:

$$U_c = \log_G(G_c) \cdot U_P \quad (8)$$

Note that Equation (8) holds as $\log_G(G_c)$ is equal to a. The certificate and the proof of knowledge PoC is sent to the user who can then validate the certificate: both the user information as the relation between $G_c$ and $U_c$ indicated Equation (8) in using the proof of knowledge PoC in combination with $G$ and $U_P$. If this validation is successful the user accepts the certificate and deletes the proof of knowledge PoC and $U_P$.

When the user wants to sign a message $M$ he proceeds as before leading to a signature $(r, s)$ on message $M$ corresponding to the Raw Authenticator Key $U_P$. Next A-APP represents the signature as the pair $(X, s)$ with $X \in \langle G \rangle$ as indicated in the observations following Algorithm 2. Now the user calculates $w = s^{-1} \bmod q$ and encrypts this in two parts:

$$E_1 = w \cdot G_c, \; E_2 = w \cdot U_c \quad (9)$$

Note the resemblance of these expressions with those in Step 4 of Algorithm 2. Next A-APP uses the techniques from [SCHNORR] and [FIAT to form a non-interactive proof of knowledge $PoC_1$ that Equation (9) holds, i.e. there exists an $x \in F_q$ such that: $E_1 = x \cdot G_c$, $E_2 = x \cdot U_c$ (10)

Of course $x = w$.

Now A-APP sends the message $M$, the certificate together with $X$, $E_1$, $E_2$ and PoC to the AP also referring to the User-Id. On receipt the AP validates that $X$, $E_1$, $E_2$ are elements of $\langle G \rangle$ and also validates PoC1 proving statement (10) holds. Also the AP converts the x-coordinate of $X$ to an integer $\bar{x}$; and computes $r = \bar{x} \bmod q$. If this is zero, the AP rejects the signature on message M returns an error to the user/A-APP. The APP increments the incorrect PIN.. Counter with one as indicated earlier. Next the AP uses the registered scalar $a_U \in F_q$ to compute

$$X' = a_U \cdot X. \quad (11)$$

Next the AP computes the hash $H(M)$ of the message $M$ and convert this to an integer e. Now the AP verifies that the following equality holds:

$$X' = e \cdot E_1 + r \cdot E_2 \quad (12)$$

If this equality holds one can easily verify that $(r, x^{-1})$ is a valid digital signature on message $M$ corresponding to the Raw Authenticator Key and thus that the user has knowledge of the PIN. Here $x$ refers to Equation (10) of which the AP knows exists but has no knowledge of. In other words, the AP knows there is signature without having access to it. Indeed, it easily follows that Equality (12) corresponds to Step 5 in Algorithm 2 albeit left and right side multiplied with the scalar $a_U$.

If successful, the AP accepts the signature and resets the PIN-Counter to zero. Next the AP uses the techniques from [SCHNORR] and [FIAT to form a non-interactive proof of knowledge $PoC_2$ that there exists an $y \in P_q$ such that: $X' = y - X$, $G_c = y \cdot G$. (13)

Of course $y = a_U$. Next the AP sends to the SP:

1. the message $M$, the certificate, $X$, $E_1$, $E_2$ and PoC1,

2. $X'$ and PoC2.

On receipt the SP operates accordingly as the AP. The SP validates that $X$, $E_1$, $E_2$ are elements of $\langle G \rangle$ and also validates PoC1 proving that Statement (10) holds. Also the AP converts the x-coordinate of $X$ to an integer $\bar{x}$; and compute $r = \bar{x} \bmod q$. If this is zero, the SP rejects the signature. Next the SP verifies that Equation (12) holds. If this is not the case the SP rejects the signature. Finally, the SP validates PoC2 proving statement (13) holds, i.e. that $X' = a_U \cdot X$ is correctly formed. If this is not the case the SP rejects the signature. Otherwise the SP accepts the signature; similar to the AP the SP now knows that $(r, x^{-1})$ is a valid digital signature on message $M$ where $x$ is from Statement (10). As the AP, the SP knows that valid signature exists on message M without having access to it.

## 6. *References*

[AES] Advanced Encryption Standard (AES), FIPS 197, National Institute of Standards and Technology (NIST), November 26, 2001.

[BENDER] Privacy-friendly revocation management without unique chip identifiers for the German national ID card, Jens Bender, Dennis Kügler, Marian Margraf, Ingo Naumann, Computer Fraud & Security, volume 2010, Issue 9, 2010, pp. Pages 14-17.

[BRAINPOOL] *ECC Brainpool standard curves and curve generation*, Internet Engineering Task Force (IETF), RFC 5639, March 2010.

[BSI-03111] Elliptic Curve Cryptography, Bundesamt für Sicherheit in der Informationstechnik (BSI), TR-03111, version 2.10, 2018-06-01, 2018.

[COOIJMANS] Analysis of Secure Key Storage Solutions on Android, Tim Cooijmans, Joeri de Ruiter, Erik Poll, Proceedings of the 4th ACM Workshop on Security and Privacy in Smartphones & Mobile Devices Pages 11-20.

[DSA] Digital Signature Standard (DSS), FIPS 186-4, National Institute of Standards and Technology (NIST), July 2013.

[eIDAS-2014] Electronic identification and trust services for electronic transactions in the internal market and repealing Directive 1999/93/EC, regulation 910/2014, the European Parliament and the Council of the European Union, 2014.

[eIDAS-2015] Implementing regulation 2015/1502, European Commission, 2015.

[eIDAS-Guide] Guidance for the application of the levels of assurance which support the eIDAS Regulation. See https://ec.europa.eu/.

[ETSI-319 411] Policy and security requirements for Trust Service Providers issuing certificates (several parts). See http://www.etsi.org.

[FIDO] See https://fidoalliance.org/.

[FIAT] How To Prove Yourself: Practical Solutions to Identification and Signature Problems, A. Fiat, A. Shamir, Proceedings on Advances in cryptology-CRYPTO '86, Lecture Notes in Computer Science, Volume 263, 1986, p. 186-194.

[GDPR] On the protection of natural persons with regard to the processing of personal data and on the free movement of such, data, and repealing Directive 95/46/EC (General Data Protection Regulation), regulation 2016/679, European Parliament and the Council of the European Union, 27 April 2016.

[IAS] IAS ECC V2, European card for e-services and national e-id applications, 07/03/2011. [ISO-14888-3] *Digital signatures with appendix - Part 3*: *Discrete logarithm based mechanisms*, International Organization for Standardization (ISO), September 2014.

[ISO-11889] Information technology - Trusted Platform Module, International Organization for Standardization (ISO), four parts.

[ISO-18045] *Methodology for IT security evaluation,* International Organization for Standardization (ISO), version 2014-01-15.

[HANKERSON] Guide to Elliptic Curve Cryptography, Darrel Hankerson, Alfred Menezes, Scott Vanstone, Springer-Verlag Berlin, Heidelberg, 2003.

[NIST-180-4] Secure Hash Standard (SHS), National Institute of Standards and Technology (NIST), FIPS PUB 180-4, August 2015

[NIST-800-38B] Recommendation for Block Cipher Modes of Operation: The CMAC Mode for Authentication, National Institute of Standards and Technology (NIST), Special Publication 800-38B, May 2005.

[NIST-800-63] Digital Identity Guidelines, National Institute of Standards and Technology (NIST), Special Publication 800-63, 22 June 2017.

[NIST-800-108] Recommendation for Key Derivation Using Pseudorandom Functions, Institute of Standards and Technology (NIST), Special Publication 800-108, October 2009.

[NIST-800-198-1], The Keyed-Hash Message Authentication Code (HMAC), National Institute of Standards and Technology (NIST), FIPS PUB 198-1, July 2008. [NIST-MODES] See https://esrc.nist_gov/Projects/Block-Cipher-Techniques/BCM/Current-Modes

[OIDC] See https://openid.net/connect/.

[PKCS#1] PKCS #1: RSA Cryptography Specifications, RFC 8017, Internet Engineering Task Force (IETF), version 2.2.

[PSD2-2015] Directive (EU) 2015/2366 (Payment Service Directive 2), The European Parliament and of the Council, 25 November 2015.

[PSD2-2017] Regulatory technical standards for strong customer authentication and common and secure open standards of communication, Commission delegated (EU) 2018/389 of 27 November 2017 supplementing Directive (EU) 2015/2366.

[RFC6960] X.509 Internet Public Key Infrastructure Online Certificate Status Protocol - OCSP, Internet Engineering Task Force (IETF), RFC 6960, June 2013.

[SAML] See https://www.oasis-open.org.

[SEC-2] SEC 2: Recommended Elliptic Curve Domain Parameters, Certicom Research, version 2.0, January 27, 2010.

[SHA] Secure Hash Standard, FIPS 180-2, National, Institute of Standards and Technology (NIST), August 2015.

[SCHNORR] Efficient signature generation for smart cards, C. P. SCHNORR, Journal of Cryptology, Volume 4 Issue 3, January 1991.

[STINSON] Cryptography: theory and practice, D.G. STINSON, CRC press, 1995.

[WebAuthn] Web Authentication: An API for accessing Public Key Credentials, World Wide Web Consortium (W3C), 4 March 2019. See https://www.w3.org/TR/webaotho/.

[WebCrypto] Web Cryptography API, World Wide Web Consortium (W3C), 26 January 2017. See https://www.w3.org/TR/WebCryptoAPI/.
[X.509] Public-key and attribute certificate frameworks, International Telecommunication Union (ITU). See https://www.ito.int.

## Claims

1. A method enabling a user generating a digital signature whereby the digital signature is fully under control of the user and that is dependent of a possession factor and a secret knowledge factor PIN, based on a software application, A-APP, on a platform holding a *Secure Cryptographic Environment,* SCE, that can be called by the A-APP, comprising of the following steps:

   a) generating, in the SCE, a specific private signing key $u$ and corresponding public key U, wherein the private key is non-exportable from the SCE,
   b) forming a private key $K_P$, based on secret knowledge factor PIN of the user entered in the A-APP and on another secret, non-exportable key in the SCE,
   c) forming the digital signature on a message $M$ by first performing an operation in A-APP on the hash $e$ of message $M$ on basis of the private key $K_P$ and letting call A-APP the SCE with the result $e'$ of that creating a digital signature $H$ using private key $u$ whereby the SCE is not aware of the existence of private key $K_P$,
   d) operating on the returned digital signature $H$ once again with the private key $K_P$ leading to another signature $H'$, which is actually a signature of a private key $u'$, with corresponding public key $U'$, wherein the private key $u'$ depends on the original private signing key $u$ and the private key $K_P$ in a fixed way and whereby the public key $U'$ can be formed on basis of the public key $U$ and private key $K_P$ and where $U'$ is the signature verification key for signature $H'$,
   e) making available the signature $H'$ and public key $U'$ for a party which can then verify signature $H'$ and associate public key $U'$ with the user.

2. Method according to Claim 1 **characterized by** the use of the signature algorithm in both the SCE as in the final signature being based on at least one of:

   - the DSA and ECDSA signature systems or variants thereof based on other groups, or
   - the EC-GDSA and EC-RDSA signature systems or variants thereof based on other groups.

3. Method according to Claim 1 or 2 **characterized by** that the private key $K_P$ is derived on basis of the PIN and at least one of symmetric encryption, symmetric decryption, asymmetric decryption, authenticated decryption, or Message Authentication Code algorithms available in the SCE, using other secret, non-exportable keys in the SCE.

4. Method according to any of Claims 1-3 further comprising that the user PIN can be changed without changing the public key U' of the user.

5. Method according to any of Claims 1-4 where the verification of the signatures generated by the A-APP by the party does not require secret key information for the party by suitably encrypting the signature H' and accompanying it with proofs of knowledge on the signature verifiable by the party.

6. Method according to one of the Claims 1-5 whereby next to the private key $K_P$ also a random private key $R$ is used by A-APP resulting in a randomized public key $U_R'$ on basis of $R$ and the public SCE key $U$ together with an encryption $E$ of key $R$ for a third party that can irreputably link key $U_R'$ and $E$ to an originally registered randomized public key $U_R$ for the user in a reproducible and verifiable fashion and by doing so can irreputably link the produced signatures related to $U_R'$ to the originally registered randomized public key $U_R$ for the user in a reproducible and verifiable fashion.

7. Method according to one of the previous claims whereby the SCE public key is provided with an attestation certificate allowing parties to verify that the SCE public key was indeed generated inside the SCE in non-exportable form.

8. Method according to one of the previous claims whereby the user public key is wrapped inside a certificate of a certificate issuer and is bound to user information allowing to irreputably link the produced signatures to the user.

9. Method according to Claim 8 whereby the issued digital certificate is used by a centralized authentication provider or a service provider to authenticate the user by letting him sign a random message and whereby the centralized authentication provider or the service provider verifies the signature, the link with the certificate and the validity of the certificate.

**10.** Method according to Claim 8 whereby the issued digital certificate is used by a service provider in encrypted form to authenticate the user by letting him sign a random message, whereby the service provider verifies the validity of the signature using a user provided public key and in interaction with the certificate issuer determines if the certificate is valid, holds the public key provided by the user and whereby the service provider optionally gets user data from the issuer.

**11.** Method according to Claims 9 or 10, whereby the service provider on behalf of the user supplements messages with electronic signatures based on authentication.

**12.** Method according to one of the previous claims, further comprising appropriately choosing the $K_P$ generation algorithm, so that the generation time, e.g. in seconds, of private key $K_P$ is configurable, thereby allowing configurable control against brute-forcing the PIN based on access to the SCE and knowledge of private $K_P$ or derived information thereof such as public key U',

**13.** Method according to one of the previous claims whereby the PIN based key is replaced by a key that is biometrically protected by the user.

**14.** Device, comprising means for storing and executing a software application, and a secure cryptographic environment configured to be called by the software application, wherein the device is configured to perform the method according to one of the previous claims.

**15.** A computer-readable medium comprising instructions which, when executed by a device according to claim 14, cause the device to carry out the method according to one of claims 1-13.

**Patentansprüche**

**1.** Ein Verfahren, das es einem Benutzer ermöglicht, eine digitale Signatur zu erzeugen, wobei die digitale Signatur vollständig unter der Kontrolle des Benutzers steht und von einem Besitzfaktor und einem geheimen Wissensfaktor PIN abhängig ist, basierend auf einer Softwareanwendung ,A-APP, auf einer Plattform, die eine sichere kryptografische Umgebung ,SCE, aufweist, die von der A-APP aufgerufen werden kann, mit den folgenden Schritten:

> a) Erzeugen eines spezifischen privaten Signaturschlüssels u und den entsprechenden öffentlichen Schlüssel U in der SCE, wobei der private Schlüssel nicht aus der SCE exportierbar ist,
> b) Bilden eines privaten Schlüssels $K_P$ in der SCE, auf der Grundlage des geheimen Wissensfaktors PIN des Benutzers, der in die A-APP eingegeben wird, und eines weiteren geheimen, nicht exportierbaren Schlüssels,
> c) Erzeugen der digitalen Signatur auf einer Nachricht M durch erst durchführen einer Verarbeitung in A-APP auf dem Hash e der Nachricht M auf der Grundlage des privaten Schlüssels $K_P$ und die A-APP das SCE aufrufen lassen mit dem Ergebnis e', aus dem eine digitale Signatur H mittels privatem Schlüssel u erstellt wird, wobei die SCE nicht von der Existenz des privaten Schlüssels $K_P$ weiß,
> d) Anwenden des privaten Schlüssels $K_P$ auf der zurückgegebenen digitalen Signatur H einmal mehr, was zu einer weiteren Signatur H' führt, die tatsächlich eine Signatur eines privaten Schlüssels u' mit dem zugehörigen öffentlichen Schlüssel U' ist, wobei der private Schlüssel u' von dem originalen privaten Signaturschlüssel u und dem privaten Schlüssel $K_P$ in einer festen Weise abhängt und wobei der öffentliche Schlüssel U' auf der Grundlage des öffentlichen Schlüssels U und des privaten Schlüssels $K_P$ erzeugt werden kann und wobei U' der Signatur-Verifikationsschlüssel für Signatur H' ist,
> e) Veröffentlichen der Signatur H' und des öffentlichen Schlüssels U' für eine Partei, die dann die Signatur H' verifizieren kann und den öffentlichen Schlüssel U' dem Benutzer zuordnen kann.

**2.** Verfahren nach Anspruch 1, **dadurch gekennzeichnet, dass** die Verwendung des Signaturalgorithmus in beiden in der SCE und in der finalen Signatur auf mindestens einem von folgendem basiert:

> - den DSA und ECDSA Signatursystemen oder Varianten davon basierend auf anderen Gruppen, oder
> - den EC-GDSA und EC-RDSA Signatursystemen oder Varianten davon basierend auf anderen Gruppen.

3. Verfahren nach Anspruch 1 oder 2, **dadurch gekennzeichnet, dass** der private Schlüssel $K_P$ auf der Grundlage der PIN und mindestens einem von symmetrischer Verschlüsselung, symmetrischer Entschlüsselung, asymmetrischer Entschlüsselung, authentifizierter Entschlüsselung oder Message Authentication Code Algorithmen, die in der SCE verfügbar sind, erlangt werden, unter Verwendung anderer geheimer, nicht exportierbarer Schlüssel in der SCE.

4. Verfahren nach einem der Ansprüche 1 bis 3, ferner umfassend, dass der Benutzer-PIN geändert werden kann, ohne den öffentlichen Schlüssel U' des Benutzers zu ändern.

5. Verfahren nach einem der Ansprüche 1 bis 4, wobei die Verifikation der durch die A-APP erzeugten Signaturen durch die Partei keine privaten Schlüsselinformationen für die Partei erfordert, durch passendes verschlüsseln der Signatur H' und begleiten davon mit Beweisen von Kenntnis über die Signatur, die von der Partei verifizierbar sind.

6. Verfahren nach einem der Ansprüche 1 bis 5 wobei neben dem privaten Schlüssel $K_P$ auch ein zufälliger privater Schlüssel R durch die A-APP verwendet wird, was in einem randomisierten öffentlichen Schlüssel $U_R'$ auf der Grundlage von R und dem öffentlichen SCE-Schlüssel U gemeinsam mit einer Verschlüsselung E des Schlüssels R für eine dritte Partei resultiert, was den Schlüssel $U_R'$ und E mit einem originalen registrierten randomisierten öffentlichen Schlüssel $U_R$ für den Benutzer in einer wiederholbaren und verifizierbaren Weise unwiederbringlich verbindet und dadurch die zu $U_R'$ verwandten Signaturen dem originalen registrierten randomisierten öffentlichen Schlüssel $U_R$ für den Benutzer in einer wiederholbaren und verifizierbaren Weise unwiederbringlich verbinden kann.

7. Verfahren nach einem der vorhergehenden Ansprüche, wobei der öffentliche SCE-Schlüssel mit einem Beglaubigungszertifikat ausgestattet ist, das es Parteien ermöglicht, zu verifizieren, dass der öffentliche SCE-Schlüssel tatsächlich in der SCE in nicht exportierbarer Weise erzeugt wurde.

8. Verfahren nach einem der vorhergehenden Ansprüche, wobei der öffentliche Schlüssel des Benutzers innerhalb eines Zertifikats eines Zertifikatsausstellers verpackt ist und an Benutzerinformationen gebunden ist, die es ermöglichen, die erzeugten Signaturen unwiederbringlich mit dem Benutzer zu verbinden.

9. Verfahren nach Anspruch 8, wobei das ausgestellte digitale Zertifikat von einem zentralisierten Authentifikationsanbieter oder einem Serviceanbieter verwendet wird, um den Benutzer zu authentifizieren indem man ihn eine zufällige Nachricht signieren lässt und wobei der zentralisierte Authentifikationsanbieter oder der Serviceanbieter die Signatur, die Verbindung mit dem Zertifikat und die Gültigkeit des Zertifikats verifiziert.

10. Verfahren nach Anspruch 8, wobei das ausgestellte digitale Zertifikat von einem Serviceanbieter in verschlüsselter Form verwendet wird, um den Benutzer zu authentifizieren indem man ihn eine zufällige Nachricht signieren lässt und wobei der der Serviceanbieter die Gültigkeit der Signatur unter Verwendung eines vom Benutzer bereitgestellten öffentlichen Schlüssels verifiziert und in Interaktion mit dem Zertifikataussteller bestimmt, ob das Zertifikat gültig ist, den von dem Benutzer bereitgestellten öffentlichen Schlüssel hält und wobei der Serviceanbieter optional Benutzerdaten von dem Aussteller erhält.

11. Verfahren nach einem der Ansprüche 9 oder 10, wobei der Serviceanbieter im Auftrag des Benutzers Nachrichten mit elektronischen Signaturen basierend auf Authentifizierung ergänzt.

12. Verfahren nach einem der vorhergehenden Ansprüche, ferner umfassend passendes Auswählen des $K_P$ Erzeugungsalgorithmus, sodass die Erzeugungszeit, z.B. in Sekunden, des privaten Schlüssels $K_P$ konfigurierbar ist, dabei ermöglichen konfigurierbarer Steuerung gegen Brute-Forcing des PINs basierend auf Zugang zu der SCE und Kenntnis des privaten $K_P$ oder davon erhaltenen Informationen wie etwa dem öffentlichem Schlüssel U'.

13. Verfahren nach einem der vorhergehenden Ansprüche, wobei der PIN basierte Schlüssel durch einen Schlüssel ersetzt ist, der durch den Benutzer biometrisch geschützt ist.

14. Vorrichtung mit Mittel zum Speichern und Ausführen einer Software Anwendung und einer sicheren kryptographischen Umgebung, die eingerichtet ist, um von der Software Anwendung aufgerufen zu werden, wobei die Vorrichtung konfiguriert ist, um das Verfahren nach einem der vorhergehenden Ansprüchen auszuführen.

15. Ein computerlesbares Medium mit Anweisungen, die, wenn von einer Vorrichtung nach Anspruch 14 ausgeführt, die Vorrichtung dazu veranlassen, das Verfahren nach einem der Ansprüche 1 bis 13 auszuführen.

**Revendications**

1. - Procédé permettant à un utilisateur de générer une signature numérique, moyennant quoi la signature numérique est entièrement sous le contrôle de l'utilisateur et qui dépend d'un facteur de possession et d'un facteur de connaissance de secret, PIN, basé sur une application logicielle, A-APP, sur une plate-forme contenant un *environnement cryptographique sécurisé,* SCE, qui peut être appelé par l'A-APP, comprenant les étapes suivantes :

   a) générer, dans le SCE, une clé de signature privée spécifique *u* et une clé publique correspondante U, la clé privée n'étant pas exportable à partir du SCE,
   b) former une clé privée *Kp,* sur la base d'un facteur de connaissance de secret, PIN, de l'utilisateur saisi dans l'A-APP et d'une autre clé secrète non-exportable dans le SCE,
   c) former la signature numérique sur un message *M* en effectuant d'abord une opération dans l'A-APP sur le hachage *e* du message *M* sur la base de la clé privée $K_P$ et en laissant l'A-APP appeler le SCE avec le résultat *e'* de cette opération créant une signature numérique *H* à l'aide d'une clé privée *u,* moyennant quoi le SCE n'a pas connaissance de l'existence de la clé privée *Kp,*
   d) exploiter la signature numérique *H* renvoyée une nouvelle fois avec la clé privée $K_P$ conduisant à une autre signature *H',* qui est en fait une signature d'une clé privée *u',* avec une clé publique correspondante *U',* la clé privée *u'* dépendant de la clé de signature privée d'origine *u* et de la clé privée $K_P$ de manière fixe, et moyennant quoi la clé publique *U'* peut être formée sur la base de la clé publique *U* et de la clé privée $K_P$, et où *U'* est la clé de vérification de signature pour la signature *H',*
   e) mettre la signature *H'* et la clé publique *U'* à la disposition d'une partie qui peut alors vérifier la signature *H'* et associer la clé publique *U'* à l'utilisateur.

2. - Procédé selon la revendication 1, **caractérisé par** l'utilisation de l'algorithme de signature à la fois dans le SCE et dans la signature finale, sur la base d'au moins l'un parmi :

   - les systèmes de signature DSA et ECDSA ou leurs variantes sur la base d'autres groupes, ou
   - les systèmes de signature EC-GDSA et EC-RDSA ou leurs variantes sur la base d'autres groupes.

3. - Procédé selon la revendication 1 ou 2, **caractérisé par le fait que** la clé privée $K_P$ est dérivée sur la base du PIN et d'au moins l'un parmi des algorithmes de chiffrement symétrique, de déchiffrement symétrique, de déchiffrement asymétrique, de déchiffrement authentifié ou de code d'authentification de message disponibles dans le SCE, en utilisant d'autres clés secrètes non-exportables dans le SCE.

4. - Procédé selon l'une quelconque des revendications 1 à 3, comprenant en outre le fait que le PIN de l'utilisateur peut être modifié sans changer la clé publique *U'* de l'utilisateur.

5. - Procédé selon l'une quelconque des revendications 1 à 4, dans lequel la vérification des signatures générées par l'A-APP par la partie ne nécessite pas d'informations de clé secrète pour la partie en chiffrant de manière appropriée la signature *H'* et en l'accompagnant de preuves de connaissance sur la signature vérifiable par la partie.

6. - Procédé selon l'une des revendications 1 à 5, dans lequel, en plus de la clé privée $K_P$, une clé privée aléatoire *R* est également utilisée par l'A-APP, conduisant à une clé publique rendue aléatoire $U_R'$ sur la base de *R* et de la clé de SCE publique *U*, conjointement avec un chiffrement *E* de la clé *R* pour un tiers qui peut relier de manière irréfutable la clé $U_R'$ et *E* à une clé publique rendue aléatoire $U_R$ enregistrée à l'origine pour l'utilisateur de manière reproductible et vérifiable et, ce faisant, peut relier de manière irréfutable les signatures produites liées à $U_R'$ à la clé publique rendue aléatoire $U_R$ enregistrée à l'origine pour l'utilisateur de manière reproductible et vérifiable.

7. - Procédé selon l'une des revendications précédentes, dans lequel la clé publique de SCE est fournie avec un certificat d'attestation permettant à des parties de vérifier que la clé publique de SCE a bien été générée à l'intérieur du SCE sous une forme non-exportable.

8. - Procédé selon l'une des revendications précédentes, dans lequel la clé publique de l'utilisateur est enveloppée dans un certificat d'un émetteur de certificat et est liée à des informations d'utilisateur permettant de relier de manière irréfutable les signatures produites à l'utilisateur.

9. - Procédé selon la revendication 8, dans lequel le certificat numérique émis est utilisé par un fournisseur d'authentification centralisé ou un fournisseur de services pour authentifier l'utilisateur en lui faisant signer un message aléatoire, et dans lequel le fournisseur d'authentification centralisé ou le fournisseur de services vérifie la signature, le lien avec le certificat et la validité du certificat.

10. - Procédé selon la revendication 8, dans lequel le certificat numérique émis est utilisé par un fournisseur de services sous forme chiffrée pour authentifier l'utilisateur en lui faisant signer un message aléatoire, dans lequel le fournisseur de services vérifie la validité de la signature en utilisant une clé publique fournie par l'utilisateur et, en interaction avec l'émetteur de certificat, détermine si le certificat est valide, conserve la clé publique fournie par l'utilisateur, et dans lequel le fournisseur de services obtient facultativement des données d'utilisateur auprès de l'émetteur.

11. - Procédé selon la revendication 9 ou 10, dans lequel le fournisseur de services pour le compte de l'utilisateur complète des messages par des signatures électroniques basées sur une authentification.

12. - Procédé selon l'une des revendications précédentes, comprenant en outre le choix approprié de l'algorithme de génération de $K_P$, de telle sorte que le temps de génération, par exemple en secondes, de la clé privée $K_P$ est configurable, permettant ainsi un contrôle configurable contre un forçage brutal du PIN sur la base d'un accès au SCE et d'une connaissance de la clé privée $K_P$ ou d'informations dérivées de celle-ci, telles que la clé publique U'.

13. - Procédé selon l'une des revendications précédentes, dans lequel la clé basée sur PIN est remplacée par une clé qui est protégée biométriquement par l'utilisateur.

14. - Dispositif comprenant des moyens de stockage et d'exécution d'une application logicielle, et un environnement cryptographique sécurisé configuré pour être appelé par l'application logicielle, dans lequel le dispositif est configuré pour mettre en oeuvre le procédé selon l'une des revendications précédentes.

15. - Support lisible par ordinateur comprenant des instructions qui, lorsqu'elles sont exécutées par un dispositif selon la revendication 14, amènent le dispositif à mettre en oeuvre le procédé selon l'une des revendications 1 à 13.

Figure 1

**Figure 2**

Figure 3

Figure 4

**Figure 5**

Figure 6

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Non-patent literature cited in the description

- Advanced Encryption Standard (AES), FIPS 197. National Institute of Standards and Technology (NIST), 26 November 2001
- **JENS BENDER ; DENNIS KÜGLER ; MARIAN MARGRAF ; INGO NAUMANN.** Privacy-friendly revocation management without unique chip identifiers for the German national ID card. *Computer Fraud & Security,* 2010, vol. 2010 (9), 14-17
- Elliptic Curve Cryptography, Bundesamt für Sicherheit in der Informationstechnik (BSI). *TR-03111,* 01 June 2018
- **TIM COOIJMANS ; JOERI DE RUITER ; ERIK POLL.** Analysis of Secure Key Storage Solutions on Android. *Proceedings of the 4th ACM Workshop on Security and Privacy in Smartphones & Mobile Devices,* 11-20
- Digital Signature Standard (DSS), FIPS 186-4. National Institute of Standards and Technology (NIST), July 2013
- Electronic identification and trust services for electronic transactions in the internal market and repealing Directive 1999/93/EC. regulation 910/2014. European Parliament and the Council of the European Union, 2014
- Implementing regulation 2015/1502. European Commission, 2015
- *Guidance for the application of the levels of assurance which support the eIDAS Regulation, https://ec.europa.eu*
- Policy and security requirements for Trust Service Providers issuing certificates. *ETSI-319 411, http://www.etsi.org*
- **A. FIAT ; A. SHAMIR.** How To Prove Yourself: Practical Solutions to Identification and Signature Problems. *Proceedings on Advances in cryptology-CRYPTO '86, Lecture Notes in Computer Science,* 1986, vol. 263, 186-194
- On the protection of natural persons with regard to the processing of personal data and on the free movement of such, data, and repealing Directive 95/46/EC (General Data Protection Regulation). regulation 2016/679. European Parliament and the Council of the European Union, 27 April 2016
- European card for e-services and national e-id applications. *IAS ECC V2,* 07 March 2011
- **DARREL HANKERSON ; ALFRED MENEZES ; SCOTT VANSTONE.** Guide to Elliptic Curve Cryptography. Springer-Verlag, 2003
- Secure Hash Standard (SHS). National Institute of Standards and Technology (NIST), August 2015
- Recommendation for Block Cipher Modes of Operation: The CMAC Mode for Authentication. National Institute of Standards and Technology (NIST), May 2005
- Digital Identity Guidelines. National Institute of Standards and Technology (NIST), 22 June 2017
- Recommendation for Key Derivation Using Pseudorandom Functions. Institute of Standards and Technology (NIST), October 2009
- The Keyed-Hash Message Authentication Code (HMAC). National Institute of Standards and Technology (NIST), 01 July 2008
- PKCS #1: RSA Cryptography Specifications. RFC 8017. Internet Engineering Task Force (IETF)
- Directive (EU) 2015/2366 (Payment Service Directive 2). The European Parliament and of the Council, 25 November 2015
- Regulatory technical standards for strong customer authentication and common and secure open standards of communication. *Commission delegated (EU) 2018/389,* 27 November 2017
- X.509 Internet Public Key Infrastructure Online Certificate Status Protocol - OCSP. RFC 6960. Internet Engineering Task Force (IETF), June 2013
- SEC 2: Recommended Elliptic Curve Domain Parameters. *Certicom Research,* 27 January 2010
- Secure Hash Standard, FIPS 180-2. National, Institute of Standards and Technology (NIST), August 2015
- **C. P. SCHNORR.** Efficient signature generation for smart cards. *Journal of Cryptology,* January 1991, vol. 4 (3
- **D.G. STINSON.** Cryptography: theory and practice. CRC press, 1995
- Web Authentication: An API for accessing Public Key Credentials. *World Wide Web Consortium (W3C),* 04 March 2019, https://www.w3.org/TR/webaotho/
- *Web Cryptography API, World Wide Web Consortium (W3C),* 26 January 2017, https://www.w3.org/TR/WebCryptoAPI/
- Public-key and attribute certificate frameworks. International Telecommunication Union (ITU)